# EUROPÄISCHE PATENTSCHRIFT

(11) **EP 1 139 906 B1**
(45) Veröffentlichungstag und Bekanntmachung des Hinweises auf die Patenterteilung: **07.06.2006**
(21) Anmeldenummer: 99962024.8
(22) Anmeldetag: 27.12.1999
(51) Int. Cl.: A61C 8/00

(54) **VERBINDUNGSANORDNUNG ZWISCHEN EINEM DENTALIMPLANTAT UND EINEM ABUTMENT**
CONNECTION BETWEEN A DENTAL IMPLANT AND AN ABUTMENT
ASSEMBLAGE D'UN IMPLANT DENTAIRE ET D'UN PILIER

(30) Priorität: 28.12.1998 WO PCT/CH98/00005
(43) Veröffentlichungstag der Anmeldung: 10.10.2001
(73) Patentinhaber: INSTITUT STRAUMANN AG, 4437 Waldenburg (CH)
(72) Erfinder: SCHÄR, Alex, CH-4125 Riehen (CH); GRANDE, Vincenzo, CH-4313 Möhlin (CH); MUNDWILER, Ulrich, CH-4456 Tenniken (CH)
(74) Vertreter: Modiano, Micaela Nadia
(86) Internationale Anmeldenummer: PCT/CH1999/000628
(87) Internationale Veröffentlichungsnummer: WO 2000/038588

(56) Entgegenhaltungen:
- WO-A-97/14371
- WO-A-99/16293

## Beschreibung

### Anwendungsgebiet der Erfindung

Die vorliegende Erfindung betrifft eine Verbindungsanordnung, welche ein an sich bekanntes, in den Kieferknochen einsetzbares Dentalimplantat und ein auf dem Implantat zu fixierendes Abutment umfasst. Oben am Implantatkopf mündet innerhalb einer zirkulär umlaufenden Implantatschulter eine axiale, sich abwärts erstreckende Aufnahmebohrung, die vorzugsweise aufsteigend konisch erweitert ist. In die Aufnahmebohrung ist die untere Wurzelpartie des Abutments einsetzbar, welche bei einer konischen Innenkonfiguration der Aufnahmebohrung eine komplementäre konische Aussenkontur besitzt. Vorteilhaft zur reproduzierbaren Positionierung des Abutments kann in der Aufnahmebohrung eine nicht-rotationssymmetrische Aufnahmekontur vorgesehen sein, zu welcher an der Wurzelpartie des Abutments eine korrespondierende, nicht-rotationssymmetrische äussere Gegenkontur vorhanden ist. Die gegenseitig sich ergänzenden nicht-rotationssymmetrischen Konturen stellen ebenfalls eine Rotationssicherung für das eingesetzte Abutment dar, wobei die Rotationssicherung an sich bereits durch die Konus-Konus-Verbindung zwischen dem Innenkonus des Implantats und der konischen Wurzelpartie am Abutment bewirkt wird.

Vom Boden der Aufnahmebohrung erstreckt sich weiter abwärts eine koaxiale Innengewindebohrung zum Eingriff einer axial im Abutment steckenden Basisschraube, so dass durch Eindrehen der Basisschraube das Abutment auf dem Implantat fixiert ist. Die Basisschraube wird in das Abutment eingeführt, wobei sich der Kopf der Basisschraube im Abutment abstützt, während der Gewindeschaft der Basisschraube unten aus dem Abutment herausragt und in die Innengewindebohrung im Implantat eingreift. Derartige Verbindungsanordnungen werden sowohl für gerade als auch für abgewinkelte Abutments benutzt. Die Basisschraube sichert das Abutment axial auf dem Implantat und - sofern Implantat und Abutment ineinander greifende nicht-rotationssymmetrische Konturen aufweisen - zusätzlich zur Konus-Konus-Verbindung auch gegen Rotation. Die wählbaren Drehpositionen, in denen das Abutment fixiert werden kann, sind durch die Gestaltung der nicht-rotationssymmetrischen Konturen, z.B. der Eckenzahl verwendeter Vielkante, limitiert.

### Stand der Technik

Der prinzipielle Aufbau des Implantats - aber noch ohne nicht-rotationssymmetrische Aufnahmekontur, vorzugsweise ein Innenvielkant - ist z.B. aus der Monographie von SCHROEDER/SUTTER/BUSER/KREKELER: Oral Implantology. Georg Thieme Verlag Stuttgart, 2. Aufl. 1996, S. 127, bekannt. Ein solches Implantat besitzt oben den Implantatkopf und unten die Schaftpartie, wobei der Implantatkopf mit der radial umlaufenden Implantatschulter zuoberst abschliesst und an der Schaftpartie je nach Implantattyp ein Aussengewinde vorhanden sein kann. Die Implantatschulter umgibt die Mündung der sich axial abwärts konisch verengenden Aufnahmebohrung, wodurch der Innenkonus entsteht. Am Bohrungsgrund geht die Aufnahmebohrung in eine koaxiale, im Durchmesser reduzierte Innengewindebohrung über, die sich nach apikal bis in die Schaftpartie hinein erstreckt und das Innengewinde aufweist.

In der WO 94/09717 und der WO 97/14371 werden Implantate des vorbeschriebenen Typs offenbart, die innerhalb der Aufnahmebohrung einen mit Abstand zur Implantatschulter angeordneten Innenvielkant aufweisen. Komplementär dazu sind an den jeweiligen Abutments Aussenvielkante vorhanden. Der Innenvielkant im Implantat erbringt erhebliche Vorteile als Positionierhilfe zur reproduzierbaren Positionierung des eingesetzten Abutments im Zusammenhang mit den Suprastrukturen, welche vom Prothetiker bzw. Zahntechniker angepasst werden, und ggf. als Rotationssicherung. Der Rotationswinkel zur Längsachse eines eingesetzten Abutments, dessen die Implantatschulter überragende Halspartie nicht rotationssymmetrisch ist, muss in Relation zur den Implantationsort umgebenden Anatomie auf ein zahntechnisches Modell übertragen werden. Beim Implantat gemäss der US 4,960,381 wird der Innenvielkant zusätzlich zuvor zum Eindrehen in den Knochen genutzt, indem man mit einem Steckschlüssel in den Innenvielkant eingreift.

Aus der WO 97/14371 ist eine Verbindungsanordnung zwischen einem Implantat mit Innenvielkant in der konischen Aufnahmebohrung und einem Abutment mit einer dazu korrespondierenden, sich nach apikal erstreckenden Wurzelpartie bekannt. Bei dieser Konstruktion befindet sich in der Wurzelpartie des Abutments nahe dem unteren Austritt des Durchgangs eine Radialnut zur Aufnahme eines Spreizrings. Der Spreizring wird auf das Schaftstück der Basisschraube aufgeschoben und kommt unterhalb des Schraubenkopfes liegen. Nun lässt sich die Basisschraube mit dem Schraubenkopf voran in die Wurzelpartie einschieben, bis der Spreizring in die Radialnut gleitet. Man setzt das soweit mit der Basisschraube und dem Spreizring vormontierte Abutment in die Aufnahmebohrung des Implantats ein. Bei einem geraden Abutment ist der Durchgang axial. Bei einem abgewinkelten Abutment ist der Durchgang ebenfalls abgewinkelt und kann zum senkrechten Einstecken des Schraubwerkzeugs eine zusätzliche vertikal orientierte Lateralöffnung aufweisen. Mit dem Schraubwerkzeug wird durch den Durchgang oder die Lateralöffnung gegriffen und so der Gewindeschaft der Basisschraube in die Innengewindebohrung des Abutments eingedreht. Der Schraubenkopf der Basisschraube drückt auf den Spreizring, welcher die Zugkraft in das Abutment einleitet, so dass dieses in die Aufnahmebohrung hinein gezogen wird.

Die Verbindungsanordnung gemäss der WO 97/14371 weist den wesentlichen Vorteil auf, dass der Schraubenkopf der Basisschraube nicht von oben in den Durchgang des Abutments eingeführt werden muss. Dies erlaubt, den Durchgang am koronalen Ende, in dem ein Innengewinde für eine Okklusalschraube vorgesehen sein kann, kleiner dimensioniert als den Durchmesser des Schraubenkopfes der Basisschraube zu gestalten. Die Platzverhältnisse an der Suprastruktur, z.B. an der künstlichen Zahnkrone, limitieren die Grösse der einsetzbaren Okklusalschraube. Im Interesse der Festigkeit der Schraubverbindung kann man so jedoch eine Basisschraube verwenden, die im Verhältnis zur Okklusalschraube nicht durchmesser-reduziert ist, sondern den gleichen Durchmesser aufweist. Als Hauptvorteil ergibt sich, dass somit Schrauben gleichen Durchmessers als Basisschraube und als in das koronale Ende eindrehbare Okklusalschraube verwendet werden können; d.h., die Innengewindebohrung im Implantat und die Innengewindebohrung in der koronalen Partie des Abutments weisen den gleichen Durchmesser auf. Dies dient der Zuverlässigkeit der Schraubverbindungen und vereinfacht das System, welches die Implantate verschiedener Konfiguration mit der Vielzahl von unterschiedlichen Aufbauteilen und dem Set der Werkzeuge bildet.

Mit der Verbindungsanordnung gemäss der WO 97/14371 gelang ein wesentlicher Fortschritt gegenüber dem bis dahin geltenden Stand der Technik. Das Einbringen der internen Radialnut im Abutment sowie die Verwendung des auf der Basisschraube steckenden und in der Radialnut aufgenommenen Spreizringes können jedoch nicht als endgültige, vollkommene Lösung angesehen werden. Die mechanische Bearbeitung der Radialnut im Abutment sowie einer Radialnut am Schaft der Basisschraube, in der der Spreizring während des Einschiebens der Basisschraube in das Abutment sitzt, muss mit hoher Präzision erfolgen und erfordert insgesamt einen nicht unerheblichen Bearbeitungs- und Prüfaufwand. Bedenkt man die relativ geringen Dimensionen der Verbindungsanordnung, die verhältnis-mässig hohen aufzunehmenden Kräfte bei wechselnder Belastung und die enormen Anforderungen an die Zuverlässigkeit, so entsteht das Bedürfnis, die prinzipiellen Vorteile der Verbindungsanordnung beizubehalten, aber den Herstellungsaufwand zu senken und vor allem die Zuverlässigkeit weiter zu erhöhen. Der Kopf der Basisschraube drückt auf die relativ schmale Ringfläche oben auf dem Spreizring und der Spreizring sitzt seinerseits pressend auf einer ebenfalls schmalen horizontalen Ringfläche innerhalb der Radialnut auf.

### Aufgabe der Erfindung

In Anbetracht des Bedürfnisses, die Funktionssicherheit der vorbekannten Verbindungsanordnung zu erhöhen und gleichzeitig den Fertigungsaufwand zu senken, liegt der Erfindung die Aufgabe zugrunde, eine vervollkommnete ' Verbindungsanordnung vorzuschlagen. Zu schaffen ist eine Verbindungsanordnung zwischen einem Implantat und einem geraden oder abgewinkelten Abutment, welche sich durch höchste Zuverlässigkeit auszeichnet. Das Abutment muss sich dabei praktikabel auf dem Implantat fixieren lassen und darf sich auch infolge von Mikrobewegungen nicht lösen. Überdies soll die Verbindungsanordnung aus wenigen, unkomplizierten Teilen bestehen und sich somit preisgünstig herstellen lassen. Die Teile der Verbindungsanordnung sollten Systemcharakter aufweisen und somit für verschiedene Varianten der Verbindungsanordnung - d.h. für die Kombination mit verschiedenen Abutments - verwendbar sein. Die wesentlichen Vorteile einer Verbindungsanordnung, wo die Basisschraube mit dem Schraubenkopf voran in die Wurzelpartie des Abutments steckt, sollen erhalten bleiben. Eine ergänzende Zielstellung dabei ist, dass die erheblich auf Biegung beanspruchte Basisschraube eine kleine Längskraft und ein möglichst hohes Lösemoment aufweist.

### Übersicht über die Erfindung

Im Abutment ist ein Einlass vorgesehen, der ein Axialdurchgang sein könnte. In diesen Einlass ist von seiten der Wurzelpartie eine Basisschraube mit deren Schraubenkopf voran bis in eine Kopfzone hinein einschiebbar. Der gegenüber dem Schraubenkopf im Durchmesser reduzierte Gewindeschaft der Basisschraube, welcher im eingesetzten Zustand aus der Wurzelpartie des Abutments herausragt, ist zum Eingriff in die axial verlaufende Innengewindebohrung im Implantat bestimmt. Nach dem Einsetzen der Basisschraube in das Abutment wird ein Stützring über den Gewindeschaft der Basisschraube in die Mündung des Einlasses hinein geschoben und in seiner bestimmungsgemässen Position fixiert. Das Fixieren geschieht durch radiales Verschweissen mit der Unterkante des Abutments. Alternativ kommt das Verkleben des Stützrings mit der Innenwandung des Abutments in Betracht, wozu ein biokompatibler und amtlich zugelassener Zement oder Kleber dient. Als weitere Alternative zur Fixierung eines eingesetzten Stützrings kann man vorsehen, die Unterkante des Abutments verlängert auszubilden, um diese nach dem Einschieben des Stützrings nach innen gewandt, d.h. die Unterkante des Stützrings unterfassend, umzubiegen. Die Basisschraube sitzt dann jeweils auf dem fixierten Stützring auf.

Es hat sich als günstig erwiesen, den Stützring an seiner Ober- und Unterkante mit einer internen Anschrägung zu versehen und die unter dem Schraubenkopf gelegene Partie des Schraubenhalses zum Schraubenkopf hin sich konisch erweiternd zu gestalten. Somit presst sich im verschraubten Zustand eine Schrägfläche des Schraubenhalses gegen die interne Anschrägung des Stützrings. Mit der identischen Kontur des Stützrings an Ober- und Unterkante muss bei der Montage nicht darauf geachtet werden, welche Kante des Stützrings oben zu liegen kommt. Der Stützring könnte, um ihm Elastizität zu verleihen, einen durchgehenden Vertikalschlitz oder Teilschlitze aufweisen. In einer besonderen Ausgestaltung hat der Stützring ein Innengewinde komplementär zum Gewindeschaft der Basisschraube, so dass man den Stützring beim Aufbringen auf die Basisschraube aufschrauben muss.

Das Zusammensetzen der Verbindungsanordnung aus Abutment mit eingesetzter Basisschraube, welche durch den eingebrachten Stützring gehalten wird, und das Implantat geschieht auf folgende Weise. Das Abutment wird mit dem Gewindeschaft der Basisschraube voran der Aufnahmebohrung des Implantats zugeführt, so dass der Gewindeschaft über der Innengewindebohrung des Implantats steht. Sind im Implantat eine nicht-rotationssymmetrische Aufnahmekontur - z.B. ein Innenvielkant - und am Abutment eine komplementäre äussere Gegenkontur vorhanden, muss man beim Zuführen auf die kongruente Stellung beider Konturen achten. Mit einem passenden Schraubwerkzeug greift man durch den durchgängigen Axialdurchgang im Abutment oder eine vorhandene Lateralöffnung in die Eingriffskontur der Basisschraube ein und schraubt diese in die Innengewindebohrung hinein. Somit wird das Abutment zunehmend tiefer und fester in die Aufnahmebohrung hineingezogen, wobei der Schraubenhals auf den im Abutment fixierten Stützring drückt.

Auf das Abutment kann dann die weitere Suprastruktur aufgesetzt werden, deren Befestigungsart vom Design des jeweilig verwendeten Abutments abhängt. Weist das Abutment eine Innengewindebohrung auf, kommt die Verschraubung mit einer Okklusalschraube in Betracht, die vorteilhaft vom gleichen Durchmesser wie die Basisschraube ist. Im Frontzahnbereich oder bei Schieflage des Implantats, wo eine okklusale Verschraubung nicht möglich ist, wird man ein Abutment mit einer seitlichen Bohrung für die transversale Verschraubung der aufgesetzten Kronenkappe benutzen. Bei soliden Abutments wird die Suprastruktur auf das Abutment aufzementiert.

Dank der Erfindung steht nun eine Verbindungsanordnung zwischen einem Implantat und einem Abutment zur Verfügung, die sich durch eine sehr hohe Funktionssicherheit - d.h. stabiler und präziser Zusammenhalt im montierten Zustand - und eine vorteilhafte Montierbarkeit bzw. Demontierbarkeit auszeichnet. Die erfindungsgemässe Verbindungsanordnung lässt sich zu effizienten Produktionskosten herstellen und ist besonders für Implantate mit einer nicht-rotationssymmetrischen Aufnahmekontur in Kombination mit geraden oder abgewinkelten Abutments mit einer korrespondierenden nicht-rotationssymmetrischen äusseren Gegenkontur geeignet.

### Kurzbeschreibung der beigefügten Zeichnungen

Es zeigen:
- Figur 1:: ein Implantat mit einem Innenachtkant im lmplantatkopf als Teilschnitt;
- Figur 2A:: ein gerades Abutment *erster Ausführungsform* mit einem Aussenachtkant an der Wurzelpartie und einem Aussenachtkant an der Halspartie als Teilschnitt;
- Figur 2B:: ein abgewinkeltes Abutment *zweiter Ausführungsform* mit einem Aussenachtkant an der Wurzelpartie, einer konischen Halspartie und einer lateralen Öffnung;
- Figur-2C:: das Abutment-gemäss-Figur 2B von unten als Perspektivansicht;
- Figur 2D:: das Abutment gemäss Figur 2B mit Versetzung des Aussenachtkants an der Wurzelpartie um 22,5° von unten als Perspektivansicht;
- Figur 2E:: ein gerades Abutment *dritter Ausführungsform* mit einem Aussenachtkant an der Wurzelpartie, einer konischen Halspartie und zwei lateralen Öffnungen;
- Figur 3A:: eine Basisschraube *erster Ausführungsform* mit konisch-tailliertem Hals;
- Figur 3B:: die Basisschraube *zweiter Ausführungsform* mit konisch-zylindrischem Hals;
- Figur 4A:: einen Stützring *ersterAusführungsform;*
- Figur 4B:: einen Stützring *zweiter Ausführungsform* mit einem durchgehenden Vertikalschlitz;
- Figur 4C:: einen Stützring *dritterAusführungsform* mit vier Dehnungsschlitzen;
- Figur 4D:: einen Stützring *vierter Ausführungsform* mit Innengewinde und durchgehendem Vertikalschlitz;
- Figur 5A:: das Abutment gemäss Figur 2A, den Stützring gemäss Figur 4A und die Basisschraube gemäss Figur 3B in Kombination als Teilschnitt;
- Figur 5B:: das Abutment gemäss Figur 2B, den Stützring gemäss Figur 4A und die Basisschraube gemäss Figur 3B in Kombination als Teilschnitt;
- Figur 5C:: das Abutment gemäss Figur 2E, den Stützring gemäss Figur 4A und die Basisschraube gemäss Figur 3B in Kombination als Teilschnitt;
- Figur 6A:: eine Verbindungsanordnung mit dem Implantat gemäss Figur 1, dem Abutment gemäss Figur 2A, dem Stützring gemäss Figur 4A und der Basisschraube gemäss Figur 3B als Teilschnitt;
- Figur 6B:: die Verbindungsanordnung gemäss Figur 6A mit aufgesetzter Goldkappe und Okklusalschraube als Teilschnitt;
- Figur 6C:: eine Verbindungsanordnung mit dem Implantat gemäss Figur 1, dem Abutment gemäss Figur 2E, dem Stützring gemäss Figur 4A, der Basisschraube gemäss Figur 3B und einer verschraubten Transversalkappe als Teilschnitt;
- Figur 7A:: das gerade Abutment gemäss Figur 2A mit axial verlängerter Unterkante, eingesetztem Stützring gemäss Figur 4A und eingesetzter Basisschraube gemäss Figur 3A als Teilschnitt;
- Figur 7B:: das Detail X aus Figur 7A in der Vergrösserung;
- Figur 7C:: die Anordnung gemäss Figur 7A mit den Stützring fixierender, umgebogener Unterkante; und
- Figur 7D:: das Detail Y aus Figur 7C in der Vergrösserung.

### Ausführungsbeispiele

Anhand der beiliegenden Zeichnungen erfolgt nachstehend die detaillierte Beschreibung von Ausführungsbeispielen zur erfindungsgemässen Verbindungsanordnung.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figur 1

Das in der Verbindungsanordnung verwendete Implantat **1** ist von an sich bekanntem Aufbau. Das Implantat **1** besitzt oben den Implantatkopf **10** und unten die Schaftpartie **19,** wobei der Implantatkopf **10** mit der radial umlaufenden Implantatschulter **11** zuoberst abschliesst und an der Schaftpartie **19** je nach Implantattyp ein Aussengewinde **190** vorhanden sein kann. Die Impfantatschulter **11** umgibt die Mündung der sich axial abwärts konisch verengenden Aufnahmebohrung **12.** Am Bohrungsgrund **13** geht die Aufnahmebohrung **12** in eine koaxiale, im Durchmesser reduzierte Innengewindebohrung **14** über, die sich bis in die Schaftpartie **19** hinein erstreckt.

Innerhalb der Aufnahmebohrung **12** ist als nicht-rotationssymmetrische Aufnahmekontur hier beispielhaft ein radial umlaufender innenachtkant **15** ausgebildet. Unterhalb des Innenachtkants **15** liegt eine zirkuläre Ringnut **16,** die sich zur spanenden Herstellung des Innenachtkants **15** empfiehlt. Der Innenachtkant **15** läuft nach oben hin in parabelförmigen Spitzen aus. Vorteilhaft liegt der Innenachtkant **15** derart innerhalb der Aufnahmebohrung **12,** dass sowohl über diesem als auch darunter unterbrechungslose, zueinander fluchtende Konusabschnitte **120,121** der Aufnahmebohrung **12** erhalten bleiben. Das dargestellte Implantat **1** ist ein Vollschraubenimplantat; die Verbindungsanordnung kann jedoch gleichermassen mit einem Hohischrauben-, Hohlkörper- und Vollkörperimplantat in gerader oder abgewinkelter Version aufgebaut werden.

### Figur 2A

Dieses gerade Abutment **2** erster Ausführungsform weist oben die Halspartie **20** und die sich nach unten anschliessende, in Abschnitten konische Wurzelpartie **29** auf. Letztere ist zum Einsetzen in die Aufnahmebohrung **12** des Implantats **1** bestimmt, während die Halspartie **20** die Implantatschulter **11** überragt. Die Halspartie **20** gliedert sich in drei Segmente, nämlich das sich unmittelbar über der Wurzelpartie **29** anschliessende Vielkantsegment **21 -** hier ein Aussenachtkant -, das zuoberst vorhandene zylindrische Führungssegment **23** und das zwischen dem Vielkantsegment **21** und dem Führungssegment **23** liegende Konussegment **22.** Das Vielkantsegment **21** ist zur reproduzierbaren Positionierung bei der Abdrucknahme und der Modellherstellung sowie als eventuelle Rotationssicherung der aufgesetzten Suprastruktur nützlich. Das Führungssegment **23** trägt zur Zentrierung und Führung der aufgesetzten Kronenkappe bei.

An der Wurzelpartie **29** befindet sich eine zur Aufnahmekontur **15** im Implantat **1** komplementäre Gegenkontur, folglich hier ein Aussenachtkant **28.** Oberhalb des Aussenachtkants **28** liegt ein Konusabschnitt **270,** welcher an das Vielkantsegment **21** angrenzt, und unterhalb des Aussenachtkants **28** liegt der Konusabschnitt **271,** mit dem das Abutment **2** an der Unterkante **272** endet: Beide Konusabschnitte **270,271** fluchten zueinander, so dass im eingesetzten Zustand jeweils vom Implantat **1** und vom Abutment **2** die oberen und unteren Konusabschnitte **120,270;121,271** aneinander zu liegen kommen. Vorzugsweise fluchten die Planflächen des Vielkantsegments **21** und des Aussenachtkants **28** zueinander.

Durch das Abutment **2** erstreckt sich ein Einlass **24,** hier im Form eines Axialdurchgangs, welcher sich in mehrere Zonen aufgliedert. Im Bereich des Führungs- und des Konussegments **23,22** ist ein Innengewinde **240** zur Aufnahme einer Okklusalschraube vorgesehen. Das Innengewinde **240** hat vorzugsweise den gleichen Durchmesser wie die Innengewindebohrung **14** im Implantat **1.** Unterhalb des Innengewindes **240** liegt nach einer Schulterfläche **244** eine gegenüber dem Innengewinde **240** im Durchmesser erweiterte Kopfzone **241,** welcher sich etwa über den Bereich von Vielkantsegment **21** und oberem Konusabschnitt **270** erstreckt. Die Kopfzone **241** geht mit einer zirkulären Schulterfläche **242** abwärts zur Mündung des Einlasses **24** in eine radiale Erweiterung **243** über. Die Erweiterung **243** weist einen grösseren Innendurchmesser als die Kopfzone **241** auf und ist zur Aufnahme eines Stützrings vorgesehen, dessen Einsetztiefe von der Schulterfläche **242** begrenzt wird.

### Figuren 2B und 2C

Das dargestellte Abutment **2** *zweiter Ausführungsform* besitzt gegenüber der ersten Ausführungsform eine abgewandelte, schräg an die unveränderte Wurzelpartie **29** ansetzende Halspartie **20,** die sich als Ganzes zum freien, oberen Ende hin konisch verjüngt. Unten endet das Abutment **2** mit der Unterkante **272.** Der Einlass **24** ist jetzt abgewinkelt, wobei wiederum intern das innengewinde **240** und - allesamt nicht sichtbar - die Kopfzone **241,** die Schulterfläche **242** und die Erweiterung **243** vorhanden sind. Für den Eingriff eines Schraubwerkzeugs besitzt das Abutment **2** an der Halspartie **20** eine senkrecht orientierte Lateralöffnung **200.** Der Aussenachtkant **28** an der Wurzelpartie **29** ist so ausgerichtet, dass zwei zueinander parallele Planflächen **280** des Aussenachtkants **28** senkrecht zur Neigung der Halspartie **20** ausgerichtet sind. Innerhalb eines Systems kann man zur besseren Anpassung an die jeweiligen anatomischen Gegebenheiten verschiedene Neigungen - z.B. 15° und 20° - vorsehen.

### Figur 2D

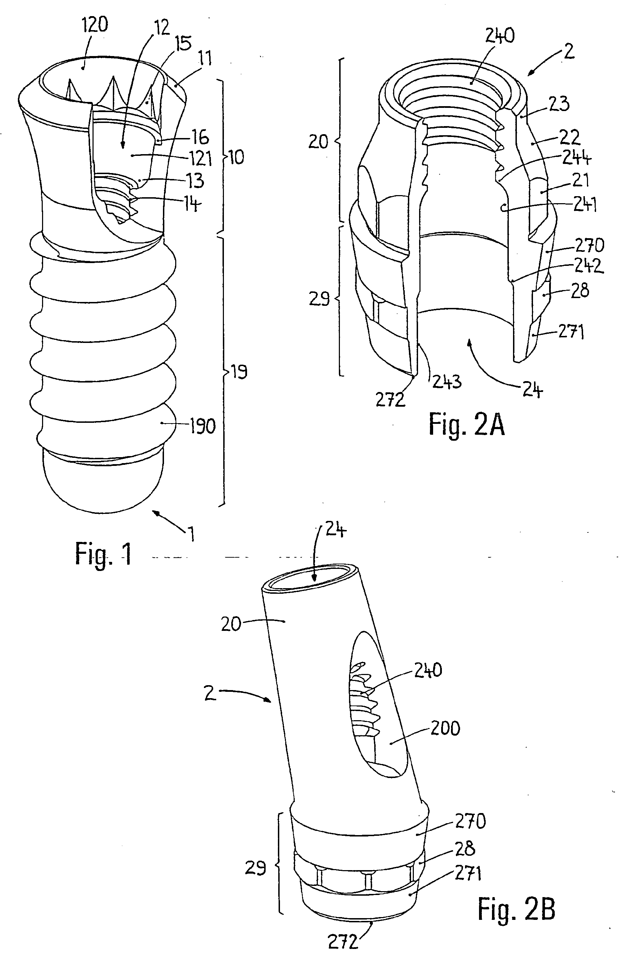

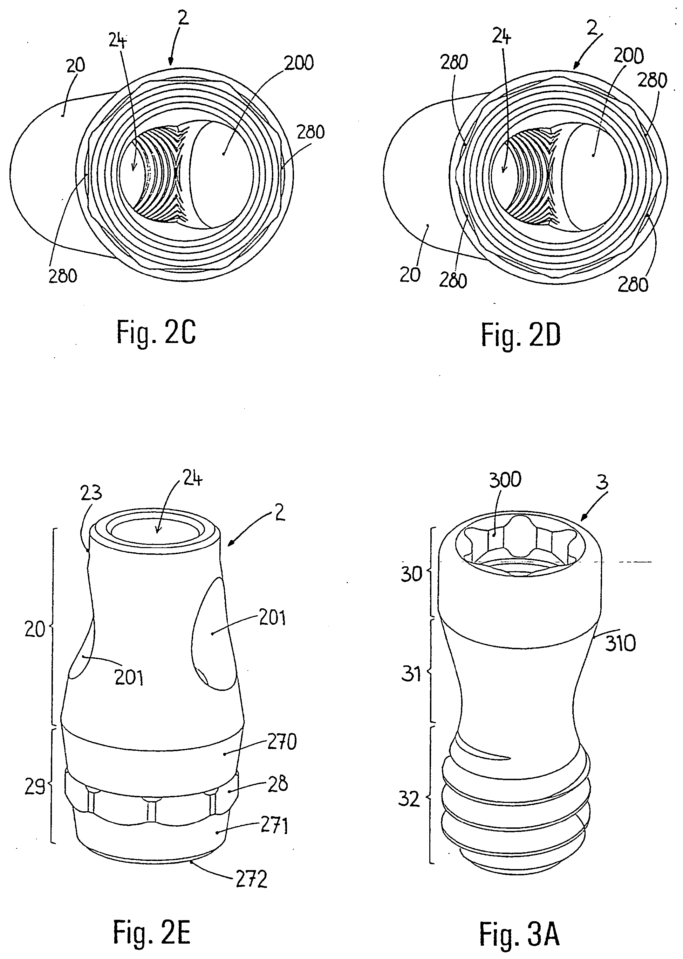

In einer Variante des abgewinkelten Abutments 2 weist der Aussenachtkant **28** an der Wurzelpartie **29** eine Versetzung um 22,5° auf, so dass alle Planflächen **280** des Aussenachtkants **28** peripher zur Neigung der Halspartie **20** ausgerichtet sind. Die durch den Schnittpunkt zweier benachbarter Planflächen **280** gebildeten Spitzen liegen nun senkrecht zur Neigung der Halspartie **20.** Mit den beiden Varianten gemäss den Figuren 2C und 2D stehen dann 16 Drehstellungen mit jeweils 22,5° Versetzung zur Verfügung.

### Figur 2E

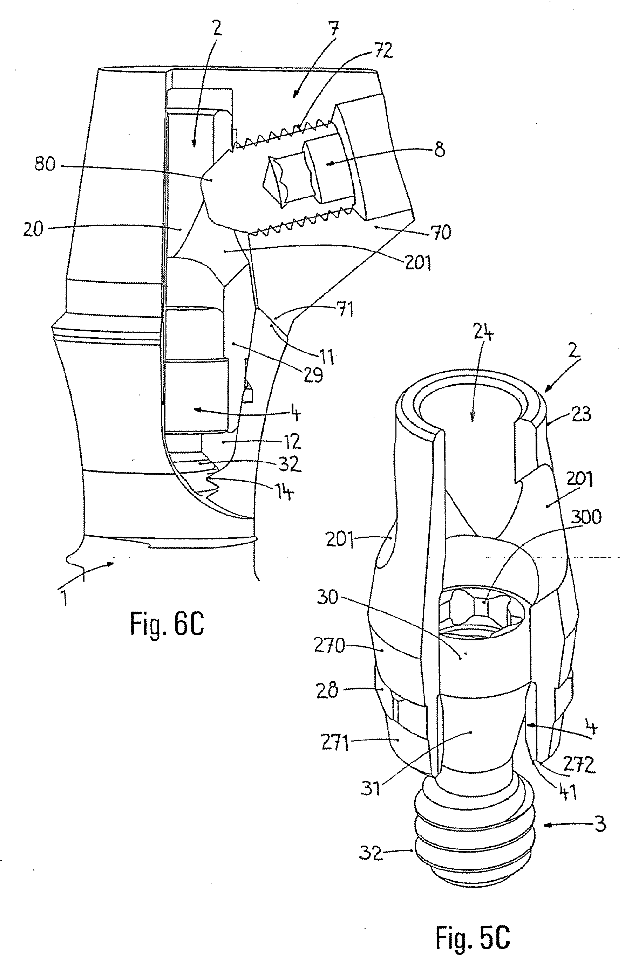

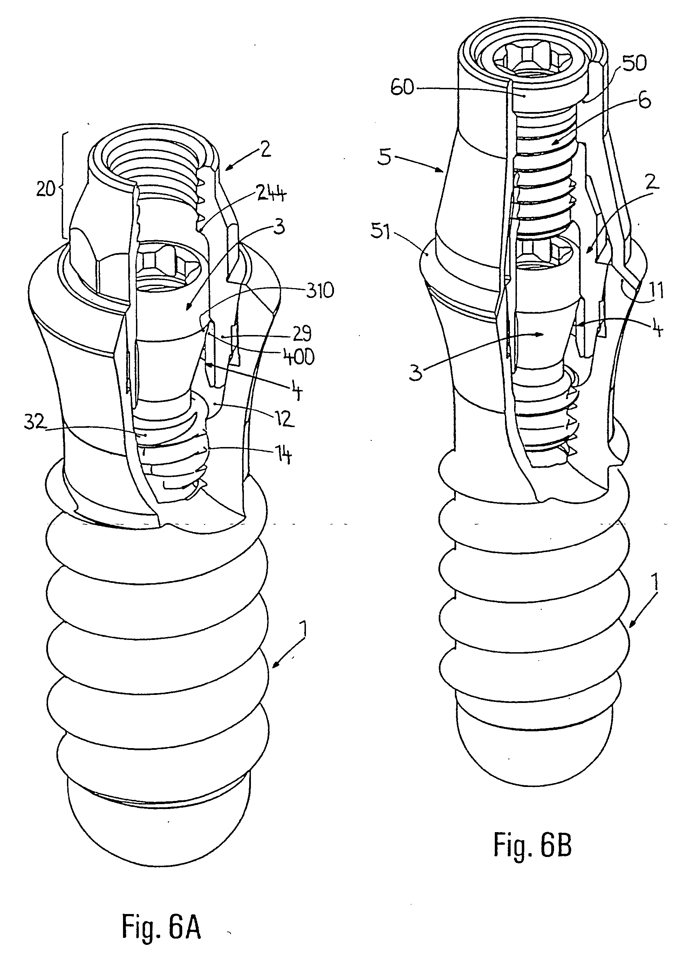

Das Abutment **2** *dritter Ausführungsform* besitzt eine an die unveränderte Wurzelpartie **29** gerade ansetzende konische Halspartie **20,** die vorteilhaft zuoberst mit einem zylindrischen Führungssegment **23** abschliesst. An der Halspartie **20** sind zwei Lateralöffnungen **201** für die transversale Verschraubung mit einer aufgesetzten Kronenkappe vorhanden. Vorzugsweise sind die Lateralöffnungen **201** von der Flucht um 22,5° zueinander versetzt. Damit stehen 16 Drehstellungen einer auf das Implantat **1** und das Abutment **2** aufgesetzten Transversalkappe **7** zur Verfügung (s. Figur 6C). So wird eine bessere Anpassung an die vorgefundenen anatomischen Verhältnisse möglich, was besonders beim Ersatz eines Einzelzahns relevant ist.

### Figur 3A

Für den Aufbau der erfindungsgemässen Verbindungsanordnung auf dem Implantat **1** benötigt man alternativ eine der zuvor beschriebenen Ausführungsformen des Abutments **2 -** die Halspartie **20** könnte weitere Modifikationen aufweisen - und eine Basisschraube **3.** Die Basisschraube **3** besteht abwärts betrachtet aus dem im Prinzip zylindrischen Schraubenkopf **30,** dem daran anschliessenden konisch-taillierten Schraubenhals **31** und dem unteren Gewindeschaft **32.** An der Oberseite des Schraubenkopfes **30** ist eine Eingriffskontur **300** für das Schraubwerkzeug vorgesehen. Der oben konische Schraubenhals **31** setzt absatzlos unten an den Schraubenkopf **30** mit einer sich zunächst verjüngenden Schrägfläche **310** an und geht dann tailliert, sich verdickend in den Gewindeschaft **32** über. Die harmonischen Übergänge zwischen Schraubenkopf **30,** Schraubenhals **31** und Gewindeschaft **32** dienen der Verminderung von Spannungskonzentrationen. Im Interesse einer möglichst geringen Schraubenlängskraft der Basisschraube **3** sollte die Oberfläche des Gewindeschafts **32** relativ glatt und zur Erzielung eines hohen Lösemoments die Schrägfläche **310** hingegen rauher beschaffen sein.

### Figur 3B

Der Unterschied zur oben beschriebenen Basisschraube **3** *erster Ausführungsform* liegt lediglich in der Geometrie des Schraubenhalses **31,** weicher hier bei der zweiten Ausführungsform konisch-zylindrisch ist. Die Schrägfläche **310** setzt wiederum ohne einen Absatz unten an den Schraubenkopf **30** an. Vorteilhaft sind die Übergänge gerundet.

### Figuren 4A bis 4D

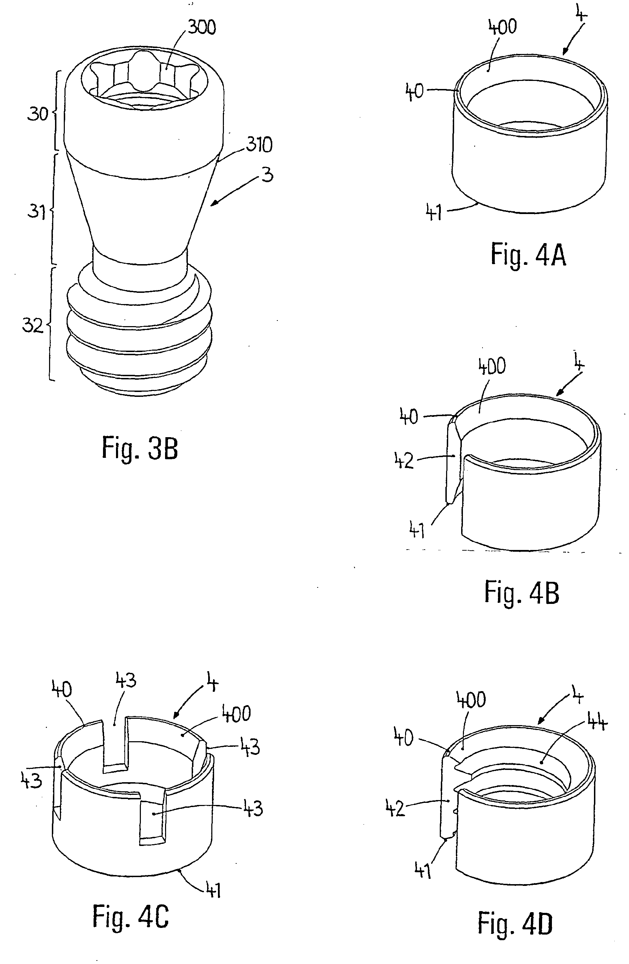

In der ersten, einfachsten Form (Figur 4A) besteht der Stützring **4** aus einem rohrförmigen Hülsenstück und besitzt an seiner Oberkante **40** eine interne Anschrägung **400** zur Auflage für die Schrägfläche **310** der Basisschraube **3.** Vorzugsweise ist auch die Unterkante **41** mit einer Anschrägung **400** versehen, so dass bei der Fertigung der Stützring **4** in das Abutment **2** eingesetzt werden kann, ohne darauf achten zu müssen, mit welcher Kante **40,41** voran man den Stützring **4** einführt. Bei der *zweiten Ausführungsform* (Figur 4B) weist der Stützring **4** einen durchgehenden Vertikalschlitz **42** auf und ist somit offen. In der *dritten Ausführungsform* (Figur 4C) sind mehrere, systematisch verteilte Dehnungsschlitze **43** vorgesehen. Diese Dehnungs-schlitze **43** laufen von der Oberkante **40** vertikal auf die Unterkante **41** zu und erstrecken sich partiell über die Höhe des Stützrings **4.** Die Anschrägung **400** ist folglich durch die Dehnungsschlitze **43** mehrfach unterbrochen. Bei der *vierten Ausführungsform* (Figur 4D) ist der Stützring **4** durch einen Vertikalschlitz **42** offen und ein Innengewinde **44** zieht sich durch den Stützring **4.** Das Innengewinde **44** ist zum Gewinde am Gewindeschaft **32** passend, so dass sich der Stützring **4** bei der Vormontage auf die Basisschraube **2** über den Gewindeschaft **32** aufschrauben lässt. Diese Form des Stützrings **4** ist in der Herstellung aufwendiger, man erhält damit aber für die aufsitzende Basisschraube **2** eine verbreiterte Anschrägung **400.**

### Figur 5A

Als Baueinheit ist in ein gerades Abutment **2** mit Vielkantsegment **21,** Konussegment **22** und Führungssegement **23** eine Basisschraube **3** eingesetzt, die von einem Stützring **4** gehalten wird. Bei der Montage dieser Baueinheit bieten sich zwei weitgehend ähnliche Arbeitsverfahren an.

### Erstes Arbeitsverfahren

- 1. Schritt:: Einführen des Schraubenkopfes **30** der Basisschraube **3** von unten in den Einlass **24** des Abutments **2,** so dass der Schraubenkopf **30** innerhalb der Kopfzone **241** zu liegen kommt.
- 2. Schritt:: Führen des Stützrings **4** über den Gewindeschaft **32** und Einsetzen des Stützrings **4** in die Erweiterung **243** im Abutment **2.** Der Stützring **4** und die Erweiterung **243** bilden zusammen im oberen Abschnitt einen Presssitz.
- 3. Schritt:: Fixieren des in der Erweiterung **243** sitzenden Stützrings **4** durch Einkleben oder Einzementieren an der Erweiterung **243** oder Verschweissen an seiner Unterkante **41** mit der Unterkante **272** des Abutments **2.** Die Schrägfläche **310** der Basisschraube **3** liegt auf der internen Anschrägung **400** im Stützring **4** auf.

### Zweites Arbeitsverfahren

- 1. Schritt:: Führen des Stützrings **4** über den Gewindeschaft **32** der Basisschraube **3**
- 2. Schritt:: Einführen des Schraubenkopfes **30** der Basisschraube **3** von unten in den Einlass **24** des Abutments **2** und Einsetzen des Stützrings **4** in die Erweiterung **243** im Abutment **2.**
- 3. Schritt:: Fixieren des in der Erweiterung **243** sitzenden Stützrings **4.**

In dieser vormontierten Kombination von Abutment **2** und durch den Stützring **4** gehaltenen Basisschraube **3** kann die Baueinheit in den Vertrieb gelangen.

### Figuren 5B und 5C

Auf gleiche Weise stellt man eine Baueinheit aus einem abgewinkelten Abutment **2** mit der Lateralöffnung **200** bzw. einem geraden Abutment **2** für Transversalverschraubung mit den Lateralöffnungen **201** und der von Stützringen **4** gehaltenen Basisschrauben **3** her.

### Figur 6A

Bei der komplettierten Verbindungsanordnung sitzt die Wurzelpartie **29** des Abutments **2** in der Aufnahmebohrung **12** des Implantats **1,** während die Halspartie **20** des Abutments **2** die Implantatschulter **11** überragt. Die Basisschraube **3** ist mit ihrem Gewindeschaft **32** in die Innengewindebohrung **14** des Implantats **1** eingeschraubt und die Schrägfläche **310** der Basisschraube **3** drückt auf die Anschrägung **400** des fest im Abutment **2** sitzenden Stützrings **4.** Durch die auf den Stützring **4** über die Schrägfläche **310** und die Anschrägung **400** einwirkenden Kräfte werden wesentliche Kraftkomponenten quer auf den Stützring **4** bzw. das Abutment **2** geleitet, so dass die Befestigung des Stützrings **4** weniger auf axiales Herausdrücken beansprucht wird. Dies ist insbesondere bedeutsam, wenn die Fixierung des Stützrings **4** im Abutment **2** durch Verschweissen seiner Unterkante **41** mit der Unterkante **272** des Abutments **2** realisiert wird. Auf diese Weise entlastet man die Schweissnaht von den wirkenden Axialkräften. Die Schulterfläche **244** ist die Kopfzone **241** so begrenzend positioniert, dass beim Herausdrehen der Basisschraube **3** deren Schraubenkopf **30** mit seiner oberen Stirnfläche an der Schulterfläche **244** ansteht, bevor der Gewindeschaft **32** der Basisschraube **3** gänzlich aus dem Innengewinde **14** im Implantat **1** ausrastet. Hierdurch wird bei weiterem Herausdrehen der Basisschraube **3** das Abutment **2** aus den Konusabschnitten **120,121** im Implantat **1** ausgestossen.

### Figur 6B

Hier ist die Verbindungsanordnung gemäss der vorherigen Figur mit einer auf das Abutment **2** aufgesetzten, an sich bekannten hülsenförmigen Kronenkappe **5** ergänzt, welche von einer in das Innengewinde **240** im Abutment **2** eingreifenden herkömmlichen Okklusalschraube **6** gehalten wird. Okklusalschraube **6** und Basisschraube **2** sind von gleicher Querschnittsdimension. Der Schraubenkopf **60** der Okklusalschraube **6** liegt in einem Schraubensitz **50,** welcher sich oben intern in der Kronenkappe **5** befindet. Zum Abstützen auf der Implantatschulter **11** weist die Kronenkappe **5** einen zur Implantatschulter **11** komplementären flanschartigen Rand **51** auf.

### Figur 6C

Diese Verbindungsanordnung umfasst ein Implantat **1,** ein Abutment **2** und eine auf das Abutment **2** aufgesetzte an sich bekannte Transversalkappe **7,** die mittels einer herkömmlichen Klemmschraube **8** transversal mit dem Abutment **2** verschraubt ist. Die Wurzelpartie **29** des Abutments **2** sitzt wiederum in der Aufnahmebohrung **12** des Implantats **1** und die Halspartie **20** des Abutments **2** überragt die Implantatschulter **11.** Der Gewindeschaft **32** der Basisschraube **3** greift in die Innengewindebohrung **14** des Implantats **1** ein, wobei die Basisschraube **3** in vorbeschriebener Weise die Anschrägung **400** des im Abutment **2** sitzenden Stützrings **4** drückt. An der Transversalkappe **7** befindet sich zuunterst eine konische Auflagefläche **71** sowie eine seitlich wegragende Nase **70** mit einem transversalen Gewindeloch **72,** in das eine Klemmschraube **8** eingedreht ist. Die Klemmschraube **8** ist auf eine der beiden Lateralöffnungen **201** gerichtet, so dass die Spitze **80** der Klemmschraube in die Lateralöffnung **201** hineinragt, sich oben gegen die Lateralöffnungen **201** abstützt und hierdurch die Transversalkappe **7** mit der Auflagefläche **71** auf die Implantatschulter **11** drückt.

### Figuren 7A und 7B

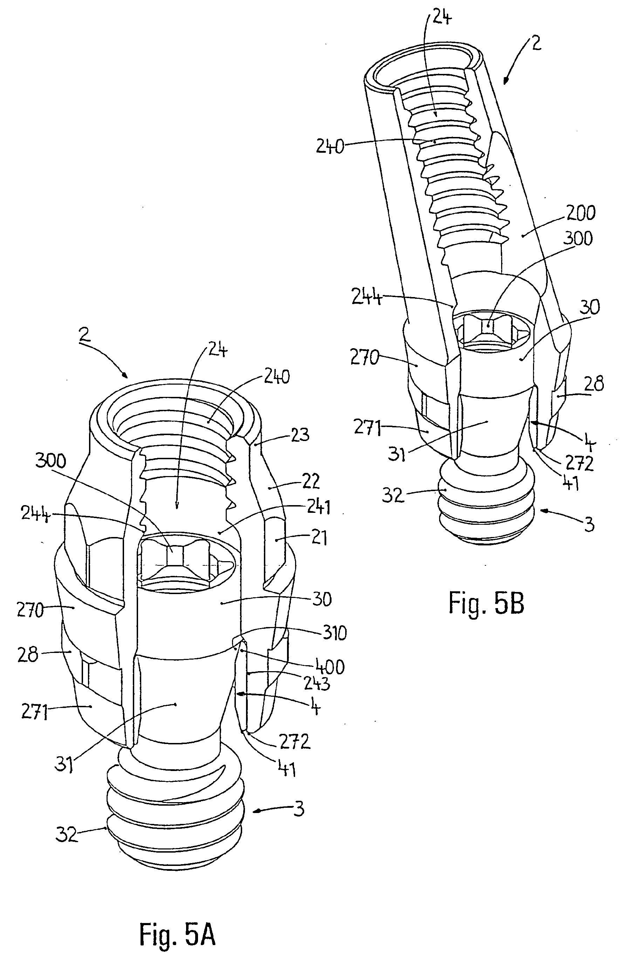

Hier ist eine weitere Ausführungsform für die Fixierung des in das gerade Abutment **2** eingesetzten Stützrings **4,** auf dessen Anschrägung **400** die Schrägfläche **310** des Schraubenhalses **31** der Basisschraube **3** aufsitzt, gezeigt. Der Schraubenkopf **30** findet wiederum in der internen Kopfzone **241** im Abutment **2** Platz. Der zunächst noch nicht fixierte Stützring **4** liegt in der Erweiterung **243** innerhalb des Einlasses **24.** Das Abutment **2** ist mit einer nach axial tiefer liegenden Unterkante **272'** versehen, welche als Biegezone **273'** die Unterkante **41** des insoweit positionierten Stützrings **4** in Abwärtsrichtung nach apikal überragt. Hinsichtlich der beiden alternativen *Arbeitsverfahren,* zum 1. und 2. Arbeitsschritt der Vormontage von Basisschraube **3** und Stützring **4** wird auf die Beschreibung zur Figur 5A verwiesen.

Zur Begünstigung des Fliessverhaltens der Biegezone **273'** beim Umbiegen und zur Erzielung einer optimalen Konturierung nach dem Umbiegen weist die Biegezone **273'** eine äussere, radial umlaufende Verschmälerung **274'** gegenüber der über der Verschmälerung **274'** liegenden Wandung des Abutment **2** auf. Der Übergang in die Verschmälerung **274'** ist durch eine konkave Krümmung **275'** gebildet und die Unterkante **272'** besitzt eine nach innen gewandte, sich nach apikal öffnende Konusfläche **276'.**

### Figuren 7C und 7D

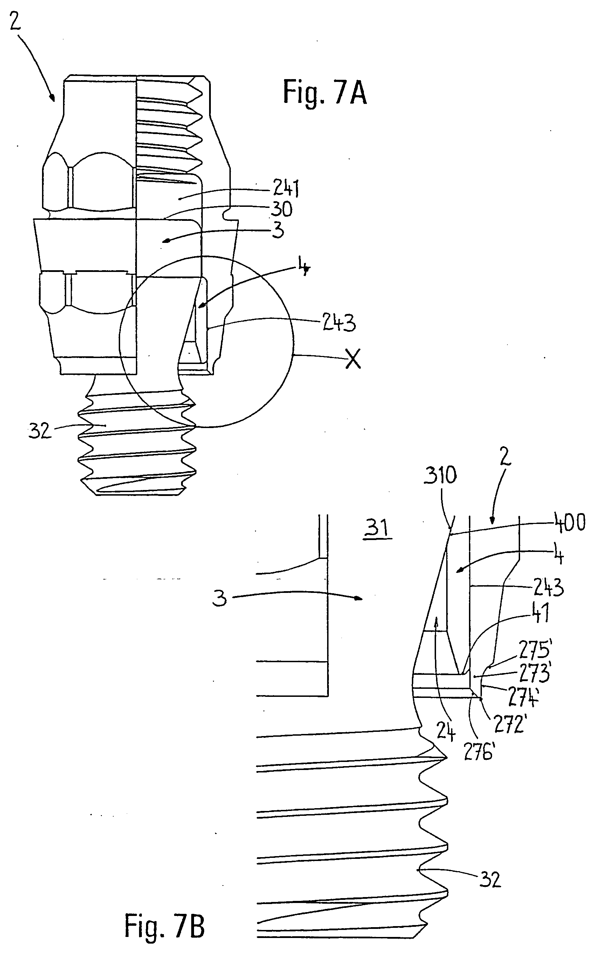

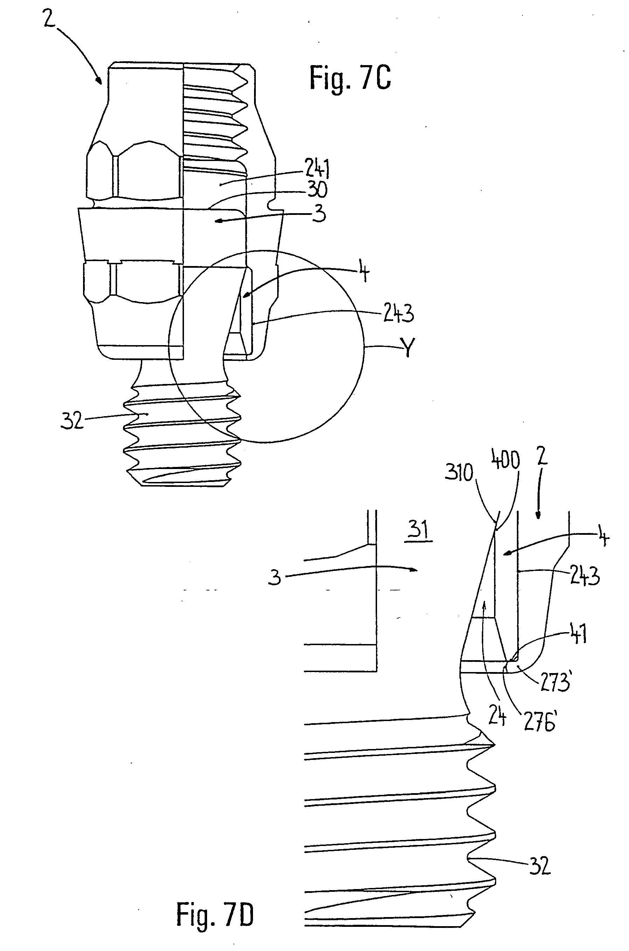

Bei der gemäss den Figuren 7A und 7B beschaffenen und vormontierten Anordnung wird zur dauerhaften Fixierung des Stützrings **4** die verlängerte Unterkante **272'** nach innen gewandt, d.h. in Richtung des Schraubenhalses **31** umgebogen. Nach dem Umbiegen unterfasst die verformte Biegezone **273'** des Abutments **2** die Unterkante **41** des Stützrings **4,** so dass dieser jetzt in der Erweiterung **243** sitzend fixiert ist. Die Verschmälerung **274'** der Biegezone **273'** ergibt jetzt eine harmonisch den Stützring **4** unterlaufende Rundung und die vorherige Konusfläche **276'** eine sich axial erstreckende Kante. Die Basisschraube **3** sitzt auf dem fixierten Stützring **4** auf, d.h. durch die Konfiguration der Schrägfläche **310** am Schraubenhals, welche bei angezogener Basisschraube **3** auf die Anschrägung **400** an der Oberkante **40** des Stützrings **4** presst, wird die Kraft im wesentlichen lateral in das Abutment 2 geleitet. In verhältnismässig geringem Masse wirken verbleibende axiale Kraftkomponenten auf die umgebogene Unterkante **272'.**

Bei dieser Ausführungsform der Verbindungsanordnung erübrigen sich die Apparatur für das Laserschweissen sowie der entsprechende spezifische Prüfaufwand und können durch eine mechanische Umformvorrichtung mit der adäquaten Gütekontrolle ersetzt werden.

Zu den vorbeschriebenen Ausführungsbeispielen sind weitere konstruktive Modifikationen realisierbar. Hier ausdrücklich erwähnt seien noch:
- Die Aufnahmebohrung **12** im Implantat **1** könnte zylindrischer Form sein. Der Innenvielkant **15** ist verzichtbar und seine Positionierung innerhalb der Aufnahmebohrung **12** frei wählbar.
- Das Abutment **2** muss grundsätzlich eine zur Aufnahmebohrung **12** des Implantats **1** komplementäre Wurzelpartie **29** besitzen. Weist das Implantat **1** einen Innenachtkant **15** auf, so sind darin Abutments **2** mit und ohne Aussenvielkant **28** einsetzbar.
- Die Aussenkontur der Halspartie **20** des Abutments **2** kann völlig konisch oder völlig zylindrisch sein sowie Kombinationen konischer und zylindrischer Segmente aufweisen.
- Das Vielkantsegment **21** am Abutment **2** könnte durch eine andere nicht-rotationssymmetrische Aussenkontur ersetzt werden, welche zuoberst des Abutments **2** oder zwischen zwei Segmenten der Halspartie **20** liegen kann. In weiteren Alternativen könnte sich die nicht-rotationssymmetrische Aussenkontur - z.B. als Abflachung - über mehrere Segmente der Halspartie **20** oder über die gesamte Halspartie **20** erstrecken.
- Das Innengewinde **240** im Abutment **2** könnte auch einen gegenüber dem Innengewinde **14** im Implantat **1** kleineren oder geringfügig grösseren Durchmesser aufweisen.
- Es versteht sich für den Fachmann, dass die Innenkontur der Kronenkappe **5** und der Transversalkappe **7** an eine modifizierte Aussenkontur des Abutments **2** und der Implantatschulter **11** angepasst sein muss.

## Patentansprüche

1. Verbindungsanordnung umfassend ein Dentalimplantat **(1)** und ein darauf zu fixierendes Abutment **(2),** wobei:
a) das Implantat **(1)** einen Implantatkopf **(10)** und eine sich nach unten erstreckende Schaftpartie (19) aufweist;
b) im Implantatkopf **(10)** eine Aufnahmebohrung **(12)** vorgesehen ist, die oben von einer Implantatschulter **(11)** umgeben mündet und unten an einem Bohrungsgrund **(13)** sacklochförmig endet, von welchem sich eine axiale, abwärts weisende Innengewindebohrung **(14)** erstreckt;
c) das Abutment **(2)** eine obere Halspartie **(20)** sowie eine untere Wurzelpartie **(29)** besitzt, die an einer Unterkante **(272)** endet, und die Halspartie **(20)** aus dem Implantat **(1)** herausragt, während die Wurzelpartie **(29)** in der Aufnahmebohrung **(12)** steckt;
d) eine das Abutment **(2)** mit dem Implantat **(1)** verbindende Basisschraube **(3)** vorgesehen ist, deren Schraubenkopf **(30)** im Abutment **(2)** sitzt, und deren Gewindeschaft **(32)** in die Innengewindebohrung **(14)** eingreift;
e) das Abutment **(2)** einen an der Unterkante **(272)** beginnenden Einlass **(24)** aufweist, in dem ein Stützring **(4)** angeordnet ist, durch den die Basisschraube **(3)** ragt; **dadurch gekennzeichnet, dass**
f) der Stützring **(4)** fest im Einlass **(24)** eingesetzt ist,
g) vor dem Einsetzen des Stützrings **(4)** die Basisschraube **(3)** mit dem Schraubenkopf **(30)** voran, von seiten der Wurzelpartie **(29),** in den Einlass **(24)** einführbar ist; und
h) die Basisschraube **(3)** im Abutment **(2)** gehalten auf dem Stützring **(4)** aufsitzt.

2. Verbindungsanordnung nach Anspruch 1, **dadurch gekennzeichnet, dass**
a) der Stützring **(4)** eine Oberkante **(40)** und eine Unterkante **(41)** aufweist; und
b) die Unterkante **(41)** des Stützrings **(4)** mit der Unterkante **(272)** des Abutments **(2)** verschweisst sind.

3. Verbindungsanordnung nach Anspruch 1, **dadurch gekennzeichnet, dass**
a) der Stützring **(4)** eine Oberkante **(40)** und eine Unterkante **(41)** aufweist;
b) das Abutment **(2)** eine axial unterhalb der Unterkante **(41)** des eingesetzten Stützring **(4),** sich nach apikal erstreckende Biegezone **(273')** besitzt, die zuunterst mit einer Unterkante **(272')** abschliesst; und
c) nach erfolgtem Umbiegen diese Biegezone **(273')** die Unterkante **(41)** des Stützrings **(4)** umfasst und unterfasst.

4. Verbindungsanordnung nach Anspruch 3, **dadurch gekennzeichnet, dass** zur Begünstigung des Fliessverhaltens der Biegezone **(273')** beim Umbiegen und zur Erzielung einer optimalen Konturierung nach dem Umbiegen
a) die Biegezone **(273')** eine äussere, radial umlaufende Verschmälerung **(274')** gegenüber der über der Verschmälerung **(274')** liegenden Wandung des Abutment **(2)** aufweist;
b) der Übergang in die Verschmälerung **(274')** durch eine konkave Krümmung **(275')** gebildet ist; und
c) die Unterkante **(272')** eine nach innen gewandte, sich nach apikal öffnende Konusfläche **(276')** besitzt.

5. Verbindungsanordnung nach einem der Ansprüche 1 bis 4,
**dadurch gekennzeichnet, dass**
a) der Stützring **(4)** an der Oberkante **(40)** eine radial umlaufende Anschrägung **(400)** besitzt, die sich zur Oberkante **(40)** hin konisch erweitert;
b) an der Basisschraube **(3)** oberhalb des Gewindeschafts **(32)** eine sich abwärts verjüngende Schrägfläche **(310)** vorhanden ist;
c) die Schrägfläche **(310)** der Basisschraube **(3)** auf der Anschrägung **(400)** des Stützrings **(4)** aufsitzt; und
d) der Schraubenkopf **(30)** zum Ansetzen eines Schraubwerkzeugs eine Eingriffskontur **(300)** hat.

6. Verbindungsanordnung nach einem der Ansprüche 1 bis 4,
**dadurch gekennzeichnet, dass**
a) die Halspartie **(20)** des Abutments **(2)** gerade oder abgewinkelt an dessen Wurzelpartie **(29)** ansetzt;
b) bei einem geraden Abutment **(2)** der Einlass **(24)** durchgehend ist und den Eingriff in die Basisschraube **(3)** mit einem Schraubwerkzeug von seiten der Halspartie **(20)** erlaubt;
c) bei einem abgewinkelten Abutment **(2)** für den Eingriff mit einem Schraubwerkzeug in die Basisschraube **(3)** die Halspartie **(20)** eine vertikal orientierte Lateralöffnung **(200)** aufweist;
d) bei einem Abutment **(2)** für eine transversal aufschraubbare Suprakonstruktion **(7)** die Halspartie **(20)** zumindest eine transversal orientierte Lateralöffnung **(201)** aufweist.

7. Verbindungsanordnung nach Anspruch 1, **dadurch gekennzeichnet, dass**
a) in der Halspartie **(20)** des Abutments **(2)** ein Innengewinde **(240)** zum Eingriff einer Okklusalschraube **(6)** zur Fixierung einer Suprakonstruktion **(5)** vorhanden ist; und
b) die Innengewindebohrung **(14)** im Implantat **(1)** sowie das Innengewinde **(240)** in der Halspartie **(20)** des Abutments **(2)** von gleichem Durchmesser sind.

8. Verbindungsanordnung nach Anspruch 1, **dadurch gekennzeichnet, dass**
a) im Implantat **(1)** die Aufnahmebohrung **(12)** sich aufwärts konisch erweitert und eine nicht-rotationssymmetrische Aufnahmekontur **(15)** aufweist; und
b) an der Wurzelpartie **(29)** des Abutments **(2)** zur konischen Aufnahmebohrung **(12)** und zur Aufnahmekontur **(15)** komplementär eine äusserliche Konuspartie **(270,271)** und eine äusserliche Gegenkontur **(28)** vorhanden sind.

9. Verbindungsanordnung nach Anspruch 8, **dadurch gekennzeichnet, dass**
a) am implantat **(1)** die nicht-rotationssymmetrische Aufnahmekontur **(15)** ein Innenvielkant **(15)** ist, über und unter dem je ein unterbrechungsloser Konusabschnitt **(120,121)** vorhanden ist, wobei beide Konusabschnitte **(120,121)** zueinander fluchten; und
b) am Abutment **(2)** die Gegenkontur **(28)** ein Aussenvielkant **(28)** ist, welcher die Konuspartie **(270,271)** in einen darüber und einen darunter liegenden Konusabschnitt **(270,271)** teilt, die beide zueinander fluchten.

10. Verbindungsanordnung nach Anspruch 5, **dadurch gekennzeichnet, dass** der Stützring **(4)**
a) auch an Unterkante **(41)** eine radial umlaufende Anschrägung **(400)** besitzt, die sich zur Unterkante **(41)** hin konisch erweitert, wodurch der Stützring **(4)** an Ober- und Unterkante **(40,41)** gleich ausgebildet ist; und
b) mittels eines durchgehenden Vertikalschlitzes **(42)** offen gestaltet sein kann oder partiell eingeschnittene Dehnungsschlitze **(43)** aufweist.

11. Verbindungsanordnung , nach _Anspruch 5 oder 10, **dadurch gekennzeichnet, dass** der Stützring **(4)** zur Verbreiterung der Anschrägung **(400)** ein Innengewinde **(44)** aufweist, welches zum Gewindeschaft **(32)** der Basisschraube **(3)** komplementär ist und ein Aufschrauben des Stützrings **(4)** über den Gewindeschaft **(32)** erlaubt.

12. Verbindungsanordnung nach Anspruch 1 oder 5, **dadurch gekennzeichnet, dass** die Basisschraube **(3)**
a) zwischen ihrem Schraubenkopf **(30)** und Gewindeschaft **(32)** ein Schraubenhals **(31)** liegt;
b) sich die Schrägfläche **(310)** am Schraubenhals **(31)** nahe dem Schraubenkopf **(30)** befindet;
c) der Schraubenhals **(31)** konisch-tailliert oder konisch-zylindrisch ist, wobei sich der Schraubenhals **(31)** hin zum Schraubenkopf **(30)** konisch erweitert; und
d) die Schrägfläche **(310)** eine grössere Rauhigkeit besitzt als der Gewindeschaft **(32),** um innerhalb der Verbindungsanordnung für die Basisschraube **(3)** ein grosses Lösemoment zu erreichen.

13. Verbindungsanordnung nach einem der Ansprüche 1, bis 12, **dadurch gekennzeichnet, dass** das Abutment **(2)**
a) im Einlass **(24)** eine Erweiterung **(243)** aufweist, die an der Unterkante **(272)** beginnt und sich intern im Abutment **(2)** adäquat zur Höhe des Stützrings (4) aufwärts bis zu einer Schulterfläche **(242)** erstreckt;
b) die Erweiterung **(243)** einen grösseren lichten Durchmesser besitzt als die darüber liegende Kopfzone **(241),** die zur Aufnahme des Schraubenkopfes **(30)** der eingesetzten Basisschraube **(3)** bestimmt ist;
c) die Erweiterung **(243)** zusammen mit dem Stützring **(4),** vorzugsweise im oberen Abschnitt, nach koronal, einen Presssitz bildet;
d) die Kopfzone **(241)** einen grösseren lichten Durchmesser besitzt als der darüber verbleibende Bereich des Einlasses **(24);** und
e) die Kopfzone **(241)** nach oben an einer einengenden Schulterfläche **(244)** endet, welche definiert positioniert ist, wodurch beim Herausdrehen der Basisschraube **(3)** deren Schraubenkopf **(30)** mit seiner oberen Stirnfläche an der Schulterfläche **(244)** ansteht, bevor der Gewindeschaft **(32)** der Basisschraube **(3)** gänzlich aus dem Innengewinde **(14)** im Implantat **(1)** ausrastet, und bei weiterem Herausdrehen der Basisschraube **(3)** das Abutment **(2)** aus den Konusabschnitten **(120,121)** im Implantat **(1)** ausgestossen wird.

14. Verbindungsanordnung nach den Ansprüchen 6 und 8, **dadurch gekennzeichnet, dass**
a) im Implantat **(1)** die Aufnahmekontur **(15)** ein Innenachtkant **(15)** ist;
b) an der Wurzelpartie **(29)** des Abutments **(2)** die komplementäre Gegenkontur **(28)** ein Aussenachtkant **(28)** mit acht Planflächen **(280)** ist;
c) an einem Abutment **(2)** mit an die Wurzelpartie **(29)** abgewinkelt angesetzter Halspartie **(20)** der Aussenachtkant **(28)** so positioniert ist, dass entweder
ca) zwei sich parallel gegenüber liegende Planflächen **(280)** senkrecht zur Neigung der Halspartie **(20)** liegen; oder
cb) der Aussenachtkant **(28)** um 22,5° versetzt ist, wodurch die im Schnittpunkt zweier benachbarter Planflächen **(280)** gebildeten Kanten senkrecht zur Neigung der Halspartie **(20)** liegen.

15. Verbindungsanordnung nach Anspruch 6, **dadurch gekennzeichnet, dass**
a) bei einem Abutment (**2**) für eine transversal verschraubbare Suprakonstruktion (**7**) die Halspartie (**20**) eine erste und eine zweite transversal orientierte Lateralöffnung (**201**) aufweist; und
b) die zweite Lateralöffnung (**201**) im Verhältnis zur ersten Lateralöffnung **(201)** von der Flucht um 22,5° zueinander versetzt ist.

16. Verbindungsanordnung nach Anspruch 1, **dadurch gekennzeichnet, dass** an der Halspartie **(20)** des Abutments **(2)** ein äusserliches Vielkantsegment **(21)** vorhanden ist, dessen Planflächen vorzugsweise mit den Planflächen des Aussenachtkants **(28)** an der Wurzeipartie **(29)** fluchten.

17. Verbindungsanordnung nach Anspruch 16, **dadurch gekennzeichnet, dass**
a) das Vielkantsegment **(21)** ein an die Wurzelpartie **(29)** angrenzender Aussenachtkant **(21)** ist;
b) oberhalb des Vielkantsegments **(21)** ein sich aufwärts verjüngendes Konussegment **(22)** liegt; und
c) über dem Konussegment **(22)** ein abschliessendes zylindrisches Führungssegment **(23)** liegen kann.

18. Abutment **(2)** mit Basisschraube **(3)** und Stützring **(4)** zum Fixieren auf einem Dentalimplantat (1), wobei:
a) das Abutment **(2)** aufweist:
aa) eine obere Halspartie **(20);** und
ab) eine untere Wurzelpartie **(29),** die an einer Unterkante **(272)** endet, und zum Einsetzen in eine im Implantat **(1)** vorhandene Aufnahmebohrung **(12)** bestimmt ist;
ac) eine Unterkante **(272),** wo ein Einlass **(24)** beginnt;
b) die Basisschraube **(3)** aufweist:
ba) einen Schraubenkopf **(30),** der im Abutment **(2)** sitzt; und
bb) einen Gewindeschaft (32), der zum Eingreifen in eine Innengewindebohrung **(14)** bestimmt ist, die im Implantat **(1)** vorhanden ist;
c) der Stützring **(4)** im Einlass **(24)** angeordnet ist; und
d) durch den Stützring **(4)** die Basisschraube **(3)** ragt, **dadurch gekennzeichnet, dass**
e) der Stützring **(4)** fest im Einlass **(24)** eingesetzt ist,
f) vor dem Einsetzen des Stützrings **(4)** die Basisschraube **(3)** mit dem Schraubenkopf **(30)** voran, von seiten der Wurzelpartie **(29),** in den Einlass **(24)** einführbar ist; und
g) die Basisschraube **(3)** im Abutment **(2)** gehalten auf dem Stützring **(4)** aufsitzt.

19. Abutment **(2)** nach Anspruch 18, **dadurch gekennzeichnet, dass**
a) der Stützring **(4)** eine Oberkante **(40)** und eine Unterkante **(41)** aufweist; und
b) die Unterkante **(41)** des Stützrings **(4)** mit der Unterkante **(272)** des Abutments **(2)** verschweisst ist.

20. Abutment (2) nach Anspruch 18, **dadurch gekennzeichnet, dass**
a) der Stützring **(4)** eine Oberkante **(40)** und eine Unterkante **(41)** aufweist;
b) das Abutment **(2)** eine axial unterhalb der Unterkante **(41)** des eingesetzten Stützring **(4),** sich nach apikal erstreckende Biegezone **(273')** besitzt, die zuunterst mit einer Unterkante **(272')** abschliesst; und
c) nach erfolgtem Umbiegen diese Biegezone **(273')** die Unterkante **(41)** des Stützrings **(4)** umfasst und unterfasst.

21. Abutment **(2)** nach Anspruch 20, **dadurch gekennzeichnet, dass** zur Begünstigung des Fliessverhaltens der Biegezone **(273')** beim Umbiegen und zur Erzielung einer optimalen Konturierung nach dem Umbiegen
a) die Biegezone **(273')** eine äussere, radial umlaufende Verschmälerung **(274')** gegenüber der über der Verschmälerung **(274')** liegenden Wandung des Abutment **(2)** aufweist;
b) der Übergang in die Verschmälerung **(274')** durch eine konkave Krümmung **(275')** gebildet ist; und
c) die Unterkante **(272')** eine nach innen gewandte, sich nach apikal öffnende Konusfläche **(276')** besitzt.

22. Abutment **(2)** nach Anspruch 18 bis 21, **dadurch gekennzeichnet, dass**
a) der Stützring **(4)** an der Oberkante **(40)** eine radial umlaufende Anschrägung **(400)** besitzt, die sich zur Oberkante **(40)** hin konisch erweitert;
b) an der Basisschraube **(3)** oberhalb des Gewindeschafts **(32)** eine sich abwärts verjüngende Schrägfläche **(310)** vorhanden ist;
c) die Schrägfläche **(310)** der Basisschraube **(3)** auf der Anschrägung **(400)** des Stützrings **(4)** aufsitzt; und
d) der Schraubenkopf (**30**) zum Ansetzen eines Schraubwerkzeugs eine Eingriffskontur **(300)** hat.

23. Abutment **(2)** nach Anspruch 18 bis 22, **dadurch gekennzeichnet, dass**
a) die Halspartie **(20)** des Abutments **(2)** gerade oder abgewinkelt an dessen Wurzelpartie **(29)** ansetzt;
b) bei einem geraden Abutment **(2)** der Einlass **(24)** durchgehend ist und den Eingriff in die Basisschraube **(3)** mit einem Schraubwerkzeug von seiten der Halspartie **(20)** erlaubt;
c) bei einem abgewinkelten Abutment **(2)** für den Eingriff mit einem Schraubwerkzeug in die Basisschraube **(3)** die Halspartie **(20)** eine vertikal orientierte Lateralöffnung **(200)** aufweist;
d) bei einem Abutment **(2)** für eine transversal aufschraubbare Suprakonstruktion **(7)** die Halspartie **(20)** zumindest eine transversal orientierte Lateralöffnung **(201)** aufweist.

24. Abutment **(2)** nach Anspruch 18, **dadurch gekennzeichnet, dass**
a) in der Halspartie **(20)** des Abutments **(2)** ein Innengewinde **(240)** zum Eingriff einer Okklusalschraube **(6)** zur Fixierung einer Suprakonstruktion **(5)** vorhanden ist; und
b) das Innengewinde **(240)** in der Halspartie **(20)** von gleichem Durchmesser ist wie die Innengewindebohrung **(14)** im Implantat **(1).**

25. Abutment **(2)** nach Anspruch 18, **dadurch gekennzeichnet, dass**
a) an der Wurzelpartie **(29)** des Abutments **(2)** eine äusserliche Konuspartie **(270,271)** und eine äusserliche Gegenkontur **(28)** vorhanden sind; wobei
b) die Konuspartie **(270,271)** zu der im Implantat **(1)** sich aufwärts konisch erweiternden Aufnahmebohrung **(12)** komplementär ist; und
c) die Gegenkontur **(28)** zu einer in der Aufnahmebohrung **(12)** vorgesehenen nicht-rotationssymmetrischen Aufnahmekontur **(15)** komplementär ist.

26. Abutment **(2)** nach Anspruch 25, **dadurch gekennzeichnet, dass** die Gegenkontur **(28)** ein Aussenvielkant **(28)** ist, welche die Konuspartie **(270,271)** in einen darüber und einen darunter liegenden Konusabschnitt **(270,271)** teilt, wobei beide Konusabschnitte **(270,271)** zueinander fluchten.

27. Abutment **(2)** nach Anspruch 22, **dadurch gekennzeichnet, dass** der Stützring **(4)**
a) auch an Unterkante **(41)** eine radial umlaufende Anschrägung **(400)** besitzt, die sich zur Unterkante **(41)** hin konisch erweitert, wodurch der Stützring **(4)** an Ober- und Unterkante **(40,41)** gleich ausgebildet ist; und
b) mittels eines durchgehenden Vertikalschlitzes **(42)** offen gestaltet sein kann oder partiell eingeschnittene Dehnungsschlitze **(43)** aufweist.

28. Abutment **(2)** nach Anspruch 22 oder 27, **dadurch gekennzeichnet, dass** der Stützring **(4)** zur Verbreiterung der Anschrägung **(400)** ein Innengewinde **(44)** aufweist, welches zum Gewindeschaft **(32)** der Basisschraube **(3)** komplementär ist und ein Aufschrauben des Stützrings **(4)** über den Gewindeschaft **(32)** erlaubt.

29. Abutment **(2)** nach Anspruch 18 oder 22, **dadurch gekennzeichnet, dass** die Basisschraube **(3)**
a) zwischen ihrem Schraubenkopf **(30)** und Gewindeschaft **(32)** ein Schraubenhals **(31)** liegt;
b) sich die Schrägfläche **(310)** am Schraubenhals **(31)** nahe dem Schraubenkopf **(30)** befindet;
c) der Schraubenhals **(31)** konisch-tailliert oder konisch-zylindrisch ist, wobei sich der Schraubenhals **(31)** hin zum Schraubenkopf **(30)** konisch erweitert; und
d) die Schrägfläche **(310)** eine grössere Rauhigkeit besitzt als der Gewindeschaft **(32),** um innerhalb der Verbindungsanordnung für die Basisschraube **(3)** ein grosses Lösemoment zu erreichen.

30. Abutment **(2)** nach einem der Ansprüche 18 bis 29, **dadurch gekennzeichnet, dass** das Abutment **(2)**
a) im Einlass **(24)** eine Erweiterung **(243)** aufweist, die an der Unterkante **(272)** beginnt und sich intern im Abutment **(2)** adäquat zur Höhe des Stützrings **(4)** aufwärts bis zu einer Schulterfläche **(242)** erstreckt;
b) die Erweiterung **(243)** einen grösseren lichten Durchmesser besitzt als die darüber liegende Kopfzone **(241),** die zur Aufnahme des Schraubenkopfes (30) der eingesetzten Basisschraube **(3)** bestimmt ist;
c) die Erweiterung **(243)** zusammen mit dem Stützring **(4),** vorzugsweise im oberen Abschnitt, nach koronal, einen Presssitz bildet;
d) die Kopfzone **(241)** einen grösseren lichten Durchmesser besitzt als der darüber verbleibende Bereich des Einlasses **(24);** und
e) die Kopfzone **(241)** nach oben an einer einengenden Schulterfläche **(244)** endet, welche definiert positioniert ist, wodurch beim Herausdrehen der Basisschraube **(3)** deren Schraubenkopf **(30)** mit seiner oberen Stirnfläche an der Schulterfläche **(244)** ansteht, bevor der Gewindeschaft **(32)** der Basisschraube **(3)** gänzlich aus dem Innengewinde **(14)** im Implantat **(1)** ausrastet, und bei weiterem Herausdrehen der Basisschraube **(3)** das Abutment **(2)** aus den Konusabschnitten **(120,121)** im Implantat **(1)** ausgestossen wird.

31. Abutment **(2)** nach den Ansprüchen 23 und 25, **dadurch gekennzeichnet, dass**
a) an der Wurzelpartie **(29)** des Abutments **(2)** die komplementäre Gegenkontur **(28)** ein Aussenachtkant **(28)** mit acht Planflächen **(280)** ist;
b) an einem Abutment **(2)** mit an die Wurzelpartie **(29)** abgewinkelt angesetzter Halspartie **(20)** der Aussenachtkant **(28)** so positioniert ist, dass entweder
ba) zwei sich parallel gegenüber liegende Planflächen **(280)** senkrecht zur Neigung der Halspartie **(20)** liegen; oder
bb) der Aussenachtkant **(28)** um 22,5° versetzt ist, wodurch die im Schnittpunkt zweier benachbarter Planflächen **(280)** gebildeten Kanten senkrecht zur Neigung der Halspartie **(20)** liegen.

32. Abutment **(2)** nach Anspruch 23, **dadurch gekennzeichnet, dass**
a) bei einem Abutment **(2)** für eine transversal verschraubbare Suprakonstruktion **(7)** die Halspartie **(20)** eine erste und eine zweite transversal orientierte Lateralöffnung **(201)** aufweist; und
b) die zweite Lateralöffnung **(201)** im Verhältnis zur ersten Lateralöffnung **(201)** von der Flucht um 22,5° zueinander versetzt ist.

33. Abutment **(2)** nach Anspruch 18, **dadurch gekennzeichnet, dass** an der Halspartie **(20)** des Abutments **(2)** ein äusserliches Vielkantsegment **(21)** vorhanden ist, dessen Planflächen vorzugsweise mit den Planflächen des Aussenachtkants **(28)** an der Wurzelpartie **(29)** fluchten.

34. Abutment **(2)** nach Anspruch 33, **dadurch gekennzeichnet dass**
a) das Vielkantsegment **(21)** ein an die Wurzelpartie **(29)** angrenzender Aussenachtkant **(21)** ist;
b) oberhalb des Vielkantsegments **(21)** ein sich aufwärts verjüngendes Konussegment **(22)** liegt; und
c) über dem Konussegment **(22)** ein abschliessendes zylindrisches Führungssegment **(23)** liegen kann.

## Claims

1. Connection arrangement comprising a dental implant (1) and an abutment (2) to be fixed thereto, wherein:
a) the implant (1) has an implant head (10) and a downwardly extending shaft portion (19);
b) provided in the implant head (10) is an accommodating bore (12), which is open at the top surrounded by an implant shoulder (11) and ends below in the form of a blind bore at a bore bottom (13), from which there extends an axial, downwardly facing internally threaded bore (14);
c) the abutment (2) has an upper neck portion (20) and a lower root portion (29) which ends at a lower edge (272) and the neck portion (20) protrudes out of the implant (1), whilst the root portion (29) is disposed in the accommodating bore (12);
d) a base screw (3) connecting the abutment (2) to the implant (1) is provided, the screw head (30) of which is seated in the abutment (2), and the threaded shaft (32) of which engages in the internally threaded bore (14);
e) the abutment (2) has an inlet (24), which begins at the lower edge (272) and arranged in which there is a support ring (4), through which the base screw (3) protrudes; **characterised in that**
f) the support ring (4) is firmly inserted into the inlet (24),
g) before insertion of the support ring (4), the base screw (3) can be introduced into the inlet (24) with the screw head (30) first, from the side of the root portion (29); and
h) the base screw (3) held in the abutment (2) is seated on the support ring (4).

2. Connection arrangement according to claim 1, **characterised in that**
a) the support ring (4) has an upper edge (40) and a lower edge (41); and
b) the lower edge (41) of the support ring (4) is welded to the lower edge (272) of the abutment (2).

3. Connection arrangement according to claim 1, **characterised in that**
a) the support ring (4) has an upper edge (40) and a lower edge (41);
b) the abutment (2) has an apically extending bending zone (273') which extends axially beneath the lower edge (41) of the inserted support ring (4) and terminates at the very bottom with a lower edge (272'); and
c) once the bending-over operation has been performed, this bending zone (273') grips around and under the lower edge (41) of the support ring (4).

4. Connection arrangement according to claim 3, **characterised in that**, in order to enhance the flow behaviour of the bending zone (273') during the bending over operation and in order to achieve optimum contouring after the bending over operation,
a) the bending zone (273') has an outer, radially encircling narrowing (274') with respect to the wall of the abutment (2) lying above the narrowing (274');
b) the transition into the narrowing (274') is formed by a concave curvature (275'); and
c) the lower edge (272') has an inwardly facing, apically open conical surface (276').

5. Connection arrangement according to one of claims 1 to 4, **characterised in that**
a) the support ring (4) has at the upper edge (40) a radially encircling bevelled surface (400), which widens conically toward the upper edge (40);
b) on the base screw (3) above the threaded shaft (32) there is a downwardly tapering inclined surface (310);
c) the inclined surface (310) of the base screw (3) rests on the bevelled surface (400) of the support ring (4); and
d) the screw head (30) has an engagement contour (300) for the placing of a screwing implement.

6. Connection arrangement according to one of claims 1 to 4, **characterised in that**
a) the neck portion (20) of the abutment (2) adjoins the root portion (29) of the latter in a straight or angled manner;
b) in the case of a straight abutment (2), the inlet (24) passes right through and allows a screwing implement to be used to reach into the base screw (3) from the side of the neck portion (20);
c) in the case of an angled abutment (2), the neck portion (20) has a vertically oriented lateral opening (200) to allow a screwing implement to be used to reach into the base screw (3);
d) in the case of an abutment (2) for a superstructure (7) which can be screwed on transversely, the neck portion (20) has at least one transversely oriented lateral opening (201).

7. Connection arrangement according to claim 1, **characterised in that**
a) in the neck portion (20) of the abutment (2) there is an internal thread (240) for the engagement of an occlusal screw (6) for the fixing of a superstructure (5); and
b) the internally threaded bore (14) in the implant (1) and the internal thread (240) in the neck portion (20) of the abutment (2) are of the same diameter.

8. Connection arrangement according to claim 1, **characterised in that**
a) in the implant (1), the accommodating bore (12) widens conically upwards and has a non-rotationally-symmetrical accommodating contour (15); and
b) on the root portion (29) of the abutment (2) there are an outer conical portion (270, 271) and an outer mating contour (28) complementing the conical accommodating bore (12) and the accommodating contour (15).

9. Connection arrangement according to claim 8, **characterised in that**
a) on the implant (1), the non-rotationally symmetrical accommodating contour (15) is an internal polygon (15), above and beneath which there is respectively an uninterrupted cone portion (120, 121), the two cone portions (120,121) being in alignment with one another; and
b) on the abutment (2), the mating contour (28) is an external polygon (28), which divides the cone portion (270, 271) into a cone portion lying above it and a cone portion lying beneath it (270 ,271), the two of which are in alignment with one another.

10. Connection arrangement according to claim 5, **characterised in that** the support ring (4)
a) also has at the lower edge (41) a radially encircling bevelled surface (400), which widens conically toward the lower edge (41), whereby the support ring (4) is of the same design at the upper and lower edges (40, 41); and
b) can be shaped in an open form by means of a penetrating vertical slit (42), or has partially cut-in expansion slits (43).

11. Connection arrangement according to claim 5 or 10, **characterised in that** for widening the bevelled surface (400), the support ring (4) has an internal thread (44), which complements the threaded shaft (32) of the base screw (3) and allows screwing on of the support ring (4) via the threaded shaft (32).

12. Connection arrangement according to claim 1 or 5, **characterised in that** the base screw (3)
a) has a screw neck (31) between its screw head (30) and its threaded shaft (32);
b) the inclined surface (310) on the screw neck (31) is located near the screw head (30);
c) the screw neck (31) is conically constricted or conically cylindrical, whereby the screw neck (31) widens conically toward the screw head (30); and
d) the inclined surface (310) has greater roughness than the threaded shaft (32), in order to achieve a great loosening moment within the connection arrangement for the base screw (3).

13. Connection arrangement according to one of claims 1 to 12, **characterised in that** the abutment (2)
a) has in the inlet (24) a widening (243), which begins at the lower edge (272) and extends internally in the abutment (2) upwardly adequately with respect to the height of the support ring (4) as far as a shoulder surface (242);
b) the widening (243) has a greater clear diameter than the head zone (241) lying above it, which is intended for receiving the screw head (30) of the inserted base screw (3);
c) together with the support ring (4), the widening (243) forms a press fit, preferably in the upper section, in the coronal direction;
d) the head zone (241) has a greater clear diameter than the region of the inlet (24) remaining above it; and
e) the head zone (241) ends in the upward direction at a constricting shoulder surface (244), which is positioned in a defined manner, whereby, when the base screw (3) is unscrewed, its screw head (30) bears with its upper end face against the shoulder surface (244), before the threaded shaft (32) of the base screw (3) fully disengages from the internal thread (14) in the implant (1) and, when the base screw (3) is unscrewed further, the abutment (2) is ejected from the cone portions (120, 121) in the implant (1).

14. Connection arrangement according to claims 6 and 8, **characterised in that**
a) in the implant (1), the accommodating contour (15) is an internal octagon (15); b) on the root portion (29) of the abutment (2), the complementary mating contour (28) is an external octagon (28) with eight plane faces (280);
c) on an abutment (2) with a neck portion (20) adjoining the root portion (29) in an angled manner, the external octagon (28) is positioned such that either
ca) two plane faces (280) lying parallel opposite one another lie perpendicular to the inclination of the neck portion (20); or
cb) the external octagon (28) is offset by 22.5°, whereby the edges formed at the point of intersection of two neighbouring plane faces (280) lie perpendicular to the inclination of the neck portion (20).

15. Connection arrangement according to claim 6, **characterised in that**
a) in the case of an abutment (2) for a superstructure (7) which can be transversely screwed on, the neck portion (20) has a first and a second transversely oriented lateral opening (201); and
b) the second lateral opening (201) is offset from mutual alignment with respect to the first lateral opening (201) by 22.5°.

16. Connection arrangement according to claim 1, **characterised in that** on the neck portion (20) of the abutment (2) there is an outer polygonal segment (21), the plane faces of which are preferably in alignment with the plane faces of the external octagon (28) on the root portion (29).

17. Connection arrangement according to claim 16, **characterised in that**
a) the polygonal segment (21) is an external octagon (21) adjacent to the root portion (29);
b) an upwardly tapering cone segment (22) lies above the polygonal segment (21); and
c) a terminating cylindrical guiding segment (23) may lie above the cone segment (22).

18. Abutment (2) with a base screw (3) and support ring (4) for the fixing of a dental implant (1), in which:
a) the abutment (2) has:
aa) an upper neck portion (20); and
ab) a lower root portion (29), which ends at a lower edge (272), and is intended for insertion in an accommodating bore (12) provided in the implant (1);
ac) a lower edge (272) where an inlet (24) begins;
b) the base screw (3) has:
ba) a screw head (30) seated in the abutment (2); and
bb) a threaded shaft (32), which is intended for engagement in an internally threaded bore (14), which is provided in the implant (1);
c) the support ring (4) is arranged in the inlet (24); and
d) the base screw (3) protrudes through the support ring (4), **characterised in that**
e) the support ring (4) is firmly inserted in the inlet (24),
f) before the insertion of the support ring (4), the base screw (3) can be introduced into the inlet (24) with the screw head (30) first, from the side of the root portion (29); and
g) the base screw (3) held in the abutment (2) is seated on the support ring (4).

19. Abutment (2) according to claim 18, **characterised in that**
a) the support ring (4) has an upper edge (40) and a lower edge (41); and
b) the lower edge (41) of the support ring (4) is welded to the lower edge (272) of the abutment (2).

20. Abutment (2) according to claim 18, **characterised in that**
a) the support ring (4) has an upper edge (40) and a lower edge (41);
b) the abutment (2) has an apically extending bending zone (273') which extends axially beneath the lower edge (41) of the inserted support ring (4) and terminates at the very bottom with a lower edge (272'); and
c) once the bending over operation has been performed, this bending zone (273') grips around and under the lower edge (41) of the support ring (4).

21. Abutment (2) according to claim 20, **characterised in that**, in order to enhance the flow behaviour of the bending zone (273') during the bending over operation and in order to achieve optimum contouring after the bending over operation,
a) the bending zone (273') has an outer, radially encircling narrowing (274') with respect to the wall of the abutment (2) lying above the narrowing (274');
b) the transition into the narrowing (274') is formed by a concave curvature (275'); and
c) the lower edge (272') has an inwardly facing, apically open conical surface (276').

22. Abutment (2) according to claims 18 to 21, **characterised in that**
a) the support ring (4) has at the upper edge (40) a radially encircling bevelled surface (400), which widens conically toward the upper edge (40);
b) on the base screw (3) there is above the threaded shaft (32) a downwardly tapering inclined surface (310);
c) the inclined surface (310) of the base screw (3) rests on the bevelled surface (400) of the support ring (4); and
d) the screw head (30) has an engagement contour (300) for the placing of a screwing implement.

23. Abutment (2) according to claims 18 to 22, **characterised in that**
a) the neck portion (20) of the abutment (2) adjoins the root portion (29) of the latter in a straight or angled manner;
b) in the case of a straight abutment (2), the inlet (24) passes right through and allows a screwing implement to be used to reach into the base screw (3) from the side of the neck portion (20);
c) in the case of an angled abutment (2), the neck portion (20) has a vertically oriented lateral opening (200) to allow a screwing implement to be used to reach into the base screw (3);
d) in the case of an abutment (2) for a superstructure (7) which can be screwed on transversely, the neck portion (20) has at least one transversely oriented lateral opening (201).

24. Abutment (2) according to claim 18, **characterised in that**
a) in the neck portion (20) of the abutment (2) there is an internal thread (240) for the engagement of an occlusal screw (6) for the fixing of a superstructure (5); and
b) the internal thread (240) in the neck portion (20) is of the same diameter as the internally threaded bore (14) in the implant (1).

25. Abutment (2) according to claim 18, **characterised in that**
a) on the root portion (29) of the abutment (2) there are an outer cone portion (270, 271) and an outer mating contour (28); whereby
b) the cone portion (270, 271) complements the accommodating bore (12) widening conically upwards in the implant (1); and
c) the mating contour (28) complements a non-rotationally-symmetrical accommodating contour (15) provided in the accommodating bore (12).

26. Abutment (2) according to claim 25, **characterised in that** the mating contour (28) is an external octagon (28), which divides the cone portion (270, 271) into a cone portion lying above it and a cone portion lying beneath it (270, 271), whereby the two cone portions (270, 271) are in alignment with one another.

27. Abutment (2) according to claim 22, **characterised in that** the support ring (4)
a) also has at the lower edge (41) a radially encircling bevelled surface (400), which widens conically toward the lower edge (41), whereby the support ring (4) is of the same design at the upper and lower edges (40, 41); and
b) can be shaped in an open form by means of a penetrating vertical slit (42), or has partially cut-in expansion slits (43).

28. Abutment (2) according to claim 22 or 27, **characterised in that** for widening the bevelled surface (400), the support ring (4) has an internal thread (44), which complements the threaded shaft (32) of the base screw (3) and allows screwing on of the support ring (4) via the threaded shaft (32).

29. Abutment (2) according to claim 18 or 22, **characterised in that** the base screw (3)
a) has a screw neck (31) between its screw head (30) and its threaded shaft (32);
b) the inclined surface (310) on the screw neck (31) is located near the screw head (30);
c) the screw neck (31) is conically constricted or conically cylindrical, whereby the screw neck (31) widens conically toward the screw head (30); and
d) the inclined surface (310) has a greater roughness than the threaded shaft (32), in order to achieve a great loosening moment within the connection arrangement for the base screw (3).

30. Abutment (2) according to one of claims 18 to 29, **characterised in that** the abutment (2)
a) has in the inlet (24) a widening (243), which begins at the lower edge (272) and extends internally in the abutment (2) upwardly adequately with respect to the height of the support ring (4) as far as a shoulder surface (242);
b) the widening (243) has a greater clear diameter than the head zone (241) lying above it, which is intended for receiving the screw head (30) of the inserted base screw (3);
c) together with the support ring (4), the widening (243) forms a press fit, preferably in the upper section, in the coronal direction;
d) the head zone (241) has a greater clear diameter than the region of the inlet (24) remaining above it; and
e) the head zone (241) ends in the upward direction at a constricting shoulder surface (244), which is positioned in a defined manner, whereby, when the base screw (3) is unscrewed, its screw head (30) bears with its upper end face against the shoulder surface (244), before the threaded shaft (32) of the base screw (3) fully disengages from the internal thread (14) in the implant (1) and, when the base screw (3) is unscrewed further, the abutment (2) is ejected from the cone portions (120,121) in the implant (1).

31. Abutment (2) according to claim 23 and 25, **characterised in that**
a) on the root portion (29) of the abutment (2), the complementary mating contour (28) is an external octagon (28) with eight plane faces (280);
b) on an abutment (2) with a neck portion (20) adjoining the root portion (29) in an angled manner, the external octagon (28) is positioned such that either
ba) two plane faces (280) lying parallel opposite one another lie perpendicular to the inclination of the neck portion (20); or
bb) the external octagon (28) is offset by 22.5°, whereby the edges formed at the point of intersection of two neighbouring plane faces (280) lie perpendicular to the inclination of the neck portion (20).

32. Abutment (2) according to claim 23, **characterised in that**
a) in the case of an abutment (2) for a superstructure (7) which can be transversely screw-connected, the neck portion (20) has a first and a second transversely oriented lateral opening (201); and
b) the second lateral opening (201) is offset from mutual alignment with respect to the first lateral opening (201) by 22.5°.

33. Abutment (2) according to claim 18, **characterised in that** on the neck portion (20) of the abutment (2) there is an outer polygonal segment (21), the plane faces of which are preferably in alignment with the plane faces of the external octagon (28) on the root portion (29).

34. Abutment (2) according to claim 33, **characterised in that**
a) the polygonal segment (21) is an external octagon (21) adjacent to the root portion (29);
b) an upwardly tapering cone segment (22) lies above the polygonal segment (21); and
c) a terminating cylindrical guiding segment (23) may lie above the cone segment (22).

## Revendications

1. Dispositif de liaison comprenant un implant dentaire (1) et un embout (2) à fixer sur celui-ci,
a) l'implant (1) comportant une tête d'implant (10) et une partie de tige (19) s'étendant vers le bas ;
b) dans la tête d'implant (10) étant prévu un perçage de réception (12) qui débouche à la partie supérieure, entouré par un épaulement d'implant (11) et se termine, à la partie inférieure, en forme de trou borgne sur un fond de perçage (13) duquel un trou taraudé (14) axial s'étend dirigé vers le bas,
c) l'embout (2) possédant une partie de col (20) supérieure ainsi qu'une partie de racine (29) inférieure qui se termine sur un bord inférieur (272), et la partie de col (20) dépassant de l'implant (1), tandis que la partie de racine (29) est enfoncée dans le perçage de réception (12) ;
d) une vis de base (3), reliant l'embout (2) à l'implant (1), étant prévue, dont la tête de vis (30) se trouve dans l'embout (2) et dont la tige filetée (32) s'engage dans le trou taraudé (14) ;
e) l'embout (2) présentant une entrée (24) commençant sur le bord inférieur (272), dans laquelle est disposée une bague d'appui (4) à travers laquelle passe la vis de base (3) ; **caractérisé en ce que**
f) la bague d'appui (4) est insérée de manière fixe dans l'entrée (24),
g) avant l'insertion de la bague d'appui (4), la vis de base (3) peut être introduite dans l'entrée (24), avec la tête de vis (30) vers l'avant, depuis des côtés de la partie de racine (29) ; et
h) la vis de base (3) se trouve dans l'embout (2), maintenue sur la bague d'appui (4).

2. Dispositif de liaison selon la revendication 1, **caractérisé en ce que**
a) la bague d'appui (4) présente un bord supérieur (40) et un bord inférieur (41) ; et
b) le bord inférieur (41) de la bague d'appui (4) est soudé avec le bord inférieur (272) de l'embout (2).

3. Dispositif de liaison selon la revendication 1, **caractérisé en ce que**
a) la bague d'appui (4) présente un bord supérieur (40) et un bord inférieur (41) ;
b) l'embout (2) possède une zone de flexion (273') s'étendant axialement vers le côté apical, au-dessous du bord inférieur (41) de la bague d'appui (4) insérée, laquelle zone de flexion se termine tout en-dessous par un bord inférieur (272') ; et
c) après qu'elle a été repliée, cette zone de flexion (273') entoure et passe sous le bord inférieur (41) de la bague d'appui (4).

4. Dispositif de liaison selon la revendication 3, **caractérisé en ce que** pour favoriser le fluage de la zone de flexion (273') lors du repliage et pour obtenir un contour optimal après repliage,
a) la zone de flexion (273') présente un rétrécissement (274') extérieur, s'étendant radialement, par rapport à la paroi de l'embout (2), située au-dessus du rétrécissement (274') ;
b) la transition vers le rétrécissement (274') est formée par une courbure concave (275') ; et
c) le bord inférieur (272') possède une surface de cône (276') tournée vers l'intérieur et s'ouvrant vers le côté apical.

5. Dispositif de liaison selon l'une des revendications 1 à 4, **caractérisé en ce que**
a) la bague d'appui (4) présente, sur le bord supérieur (40), un chanfrein (400) s'étendant radialement, qui s'élargit coniquement vers le bord supérieur (40) ;
b) sur la vis de base (3), au-dessus de la tige filetée (32), est prévue une surface oblique (310) se rétrécissant vers le bas ;
c) la surface oblique (310) de la vis de base (3) repose sur le chanfrein (400) de la bague d'appui (4) ; et
d) la tête de vis (30) présente un contour de prise (300) pour y placer un outil de vissage.

6. Dispositif de liaison selon l'une des revendications 1 à 4, **caractérisé en ce que**
a) la partie de col (20) de l'embout (2) se rattache en ligne droite ou de manière coudée sur sa partie de racine (29) ;
b) dans le cas d'un embout (2) droit, l'entrée (24) est traversante et permet l'engagement d'un outil de vissage, depuis des côtés de la partie de col (20) dans la vis de base (3) ;
c) dans le cas d'un embout (2) coudé, pour l'engagement d'un outil de vissage dans la vis de base (3), la partie de col (20) présente une ouverture latérale (200) orientée verticalement ;
d) dans le cas d'un embout (2) pour une superstructure (7) à visser transversalement, la partie de col (20) présente au moins une ouverture latérale (201) orientée transversalement.

7. Dispositif de liaison selon la revendication 1, **caractérisé en ce que**
a) dans la partie de col (20) de l'embout (2) est prévu un taraudage (240) pour l'engagement d'une vis d'occlusion (6) pour la fixation d'une superstructure (5) ; et
b) le trou taraudé (14) dans l'implant (1) ainsi que le taraudage (240) dans la partie de col (20) de l'embout (2) présentent un même diamètre.

8. Dispositif de liaison selon la revendication 1, **caractérisé en ce que**
a) dans l'implant (1) le perçage de réception (12) s'élargit coniquement vers le haut et présente un contour de réception (15) sans symétrie de révolution ; et
b) sur la partie de racine (29) de l'embout (2) se trouvent une partie de cône extérieure (270, 271) et un contre-contour extérieur (28) complémentaires du perçage de réception conique (12) et du contour de réception (15).

9. Dispositif de liaison selon la revendication 8, **caractérisé en ce que**
a) sur l'implant (1), le contour de réception (15) sans symétrie de révolution est un polygone femelle (15) au-dessus et au-dessous duquel est prévu un tronçon de cône (120, 121) sans interruption, les deux tronçons de cône (120, 121) étant alignés l'un avec l'autre ; et
b) sur l'embout (2) le contre-contour (21) est un polygone mâle (28) qui divise la partie de cône (270, 271) en un tronçon de cône (270) situé au-dessus et un tronçon de cône (271) situé au-dessous, lesquels sont alignés l'un avec l'autre.

10. Dispositif de liaison selon la revendication 5, **caractérisé en ce que** la bague d'appui (4)
a) présente aussi sur le bord inférieur (41) un chanfrein (400) s'étendant radialement, qui s'élargit coniquement vers le bord inférieur (41), ce qui fait que la bague d'appui (4) est réalisée à l'identique sur le bord supérieur et le bord inférieur (40, 41) ; et
b) peut être réalisée ouverte au moyen d'une fente verticale (42) traversante, ou présente des fentes d'expansion (43) partiellement entaillées.

11. Dispositif de liaison selon la revendication 5 ou 10, **caractérisé en ce que** la bague d'appui (4) présente, pour l'élargissement du chanfrein (400), un taraudage (44) qui est complémentaire de la tige filetée (32) de la vis de base (3) et permet un vissage de la bague d'appui (4) par l'intermédiaire de la tige filetée (32).

12. Dispositif de liaison selon la revendication 1 ou 5, **caractérisé en ce que** la vis de base (3)
a) présente un col de vis (31) entre sa tête de vis (30) et la tige filetée (32) ;
b) la surface oblique (310) sur le col de vis (31) se trouve à proximité de la tête de vis (30) ;
c) le col de vis (31) est de taille conique ou cylindrique conique, le col de vis (31) s'élargissant coniquement vers la tête de vis (30) ; et
d) la surface oblique (310) présente une plus grande rugosité que la tige filetée (32), afin d'obtenir un grand moment de desserrage pour la vis de base (3), à l'intérieur du dispositif de liaison.

13. Dispositif de liaison selon l'une des revendications 1 à 12, **caractérisé en ce que** l'embout (2)
a) présente dans l'entrée (24) un élargissement qui commence sur le bord inférieur (272) et s'étend à l'intérieur de l'embout (2), au niveau de la hauteur de la bague d'appui (4), vers le haut, jusqu'à une surface d'épaulement (242) ;
b) l'élargissement (243) présente un plus grand diamètre libre que la zone de tête (241) située au-dessus, laquelle est destinée à recevoir la tête de vis (30) de la vis de base (3) insérée ;
c) l'élargissement (243) forme un ajustement serré avec la bague d'appui (4), de préférence dans le segment supérieur, vers le côté coronaire ;
d) la zone de tête (241) présente un plus grand diamètre libre que la zone située au-dessus de l'entrée (24) ; et
e) la zone de tête (241) se termine ver le côté supérieur, sur une surface d'épaulement (244) de rétrécissement, laquelle est positionnée de manière définie, ce qui fait que lors du desserrage de la vis de base (3), sa tête de vis (30) se trouve, par sa surface frontale supérieure contre la surface d'épaulement (244), avant que la tige filetée (32) de la vis de base (3) ne se décroche totalement du taraudage (14) de l'implant (1), et lorsque l'on continue de dévisser la vis de base (3), l'embout (2) est éjecté des tronçons de cône (120, 121) dans l'implant (1).

14. Dispositif de liaison selon les revendications 6 et 8, **caractérisé en ce que**
a) dans l'implant (1), le contour de réception (15) est un octogone femelle (15) ;
b) sur la partie de racine (29) de l'embout (2), le contre-contour (28) complémentaire est un octogone mâle (28) avec huit surfaces planes (280) ;
c) sur un embout (2) avec partie de col (20) placée coudée sur la partie de racine (29), l'octogone mâle (28) est positionné de manière que soit
ca) deux surfaces planes (280) parallèles l'une à l'autre se situent perpendiculairement à la pente de la partie de col (20) ; soit
cb) l'octogone mâle (28) soit décalé de 22,5°, ce qui fait que les arêtes formées par deux surfaces planes (280) voisines au point d'intersection, sont perpendiculaires à la pente de la partie de col (20).

15. Dispositif de liaison selon la revendication 6, **caractérisé en ce que**
a) dans le cas d'un embout (2) pour une superstructure (7) à visser transversalement, la partie de col (20) présente une première et une deuxième ouverture latérale (201) orientées transversalement ; et
b) la deuxième ouverture latérale (201) est décalée de 22,5° par rapport à l'alignement avec la première ouverture latérale (201).

16. Dispositif de liaison selon la revendication 1, **caractérisé en ce que** sur la partie de col (20) de l'embout (2) est prévu un segment polygonal extérieur (21) dont les surfaces planes sont de préférence alignées avec les surfaces planes de l'octogone mâle (28) sur la partie de racine (29).

17. Dispositif de liaison selon la revendication 16, **caractérisé en ce que**
a) le segment polygonal (21) est un octogone mâle (21) adjacent à la partie de racine (29) ;
b) au-dessus du segment polygonal (21) se situe un segment de cône (22) se rétrécissant vers le haut ; et
c) au-dessus du segment de cône (21) peut se situer un segment de guidage (23) cylindrique de fermeture.

18. Embout (2) avec vis de base (3) et bague d'appui (4) pour la fixation sur un implant dentaire (1),
a) l'embout (2) comportant :
aa) une partie de col supérieure (20) ; et
ab) une partie de racine inférieure (29) qui se termine sur un bord inférieur (272), et est destinée à être insérée dans un perçage de réception (12) prévu dans l'implant (1) ;
ac) un bord inférieur (272) où commence une entrée (24) ;
b) la vis de base comportant :
ba) une tête de vis (30) qui se trouve dans l'embout (2) ; et
bb) une tige filetée (32) qui est destinée à s'engager dans un trou taraudé (14) qui est prévu dans l'implant (1) ;
c) la bague d'appui (4) étant disposée dans l'entrée (24) ; et
d) la vis de base (3) traversant la bague d'appui (4), **caractérisé en ce que**
e) la bague d'appui (4) est insérée de manière fixe dans l'entrée (24),
f) avant l'insertion de la bague d'appui (4), la vis de base (3) peut être introduite dans l'entrée (24), avec sa tête de vis (30) vers l'avant, depuis des côtés de la partie de racine (29) ; et
g) la vis de base (3) repose dans l'embout (2), maintenue sur la bague d'appui (4).

19. Embout (2) selon la revendication 18, **caractérisé en ce que**
a) la bague d'appui (4) présente un bord supérieur (40) et un bord inférieur (41) ; et
b) le bord inférieur (41) de la bague d'appui (4) est soudé avec le bord inférieur (272) de l'embout (2).

20. Embout (2) selon la revendication 18), **caractérisé** e, ce que
a) la bague d'appui (4) présente un bord supérieur (40) et un bord inférieur (41) ;
b) l'embout (2) possède une zone de flexion (273') s'étendant axialement vers le côté apical, au-dessous du bord inférieur (41) de la bague d'appui (4) insérée, laquelle zone de flexion se termine tout en-dessous par un bord inférieur (272') ; et
c) après qu'elle a été repliée, cette zone de flexion (273') entoure et passe sous le bord inférieur (41) de la bague d'appui (4).

21. Embout (2) selon la revendication 20, **caractérisé en ce que** afin de favoriser le fluage de la zone de flexion (273') lors du repliage et afin d'obtenir un contour optimal après repliage,
a) la zone de flexion (273') présente un rétrécissement (274') extérieur, s'étendant radialement, par rapport à la paroi de l'embout (2), située au-dessus du rétrécissement (274') ;
b) la transition vers le rétrécissement (274') est formée par une courbure concave (275') ; et
c) le bord inférieur (272') possède une surface de cône (276') tournée vers l'intérieur et s'ouvrant vers le côté apical.

22. Embout (2) selon les revendications 18 à 21, **caractérisé en ce que**
a) la bague d'appui (4) présente, sur le bord supérieur (40), un chanfrein (400) s'étendant radialement, qui s'élargit coniquement vers le bord supérieur (40) ;
b) sur la vis de base (3), au-dessus de la tige filetée (32), est prévue une surface oblique (310) se rétrécissant vers le bas ;
c) la surface oblique (310) de la vis de base (3) repose sur le chanfrein (400) de la bague d'appui (4) ; et
d) la tête de vis (30) présente un contour de prise (300) pour y placer un outil de vissage.

23. Embout (2) selon les revendications 18 à 22, **caractérisé en ce que**
a) la partie de col (20) de l'embout (2) se rattache en ligne droite ou de manière coudée sur sa partie de racine (29) ;
b) dans le cas d'un embout (2) droit, l'entrée (24) est traversante et permet l'engagement d'un outil de vissage, depuis des côtés de la partie de col (20) dans la vis de base (3) ;
c) dans le cas d'un embout (2) coudé, pour l'engagement d'un outil de vissage dans la vis de base (3), la partie de col (20) présente une ouverture latérale (200) orientée verticalement ;
d) dans le cas d'un embout (2) pour une superstructure (7) à visser transversalement, la partie de col (20) présente au moins une ouverture latérale (201) orientée transversalement.

24. Embout (2) selon la revendication 18, **caractérisé en ce que**
a) dans la partie de col (20) de l'embout (2) est prévu un taraudage (240) pour l'engagement d'une vis d'occlusion (6) pour la fixation d'une superstructure (5) ; et
b) le taraudage (240) de la partie de col (20) présente le même diamètre que le trou taraudé (14) dans l'implant (1)

25. Embout (2) selon la revendication 18, **caractérisé en ce que**
a) sur la partie de racine (29) de l'embout (2) sont prévus une partie de cône extérieure (270, 271) et un contre-contour extérieur (28) ;
b) la partie de cône (270, 271) étant complémentaire du perçage de réception (12) s'élargissant coniquement vers le haut dans l'implant (1) ; et
c) le contre-contour (28) est complémentaire d'un contour de réception (15) sans symétrie de révolution, prévu dans le perçage de réception (12).

26. Embout (2) selon la revendication 25, **caractérisé en ce que** le contre-contour (28) est un polygone mâle (28) qui divise la partie de cône (270, 271) en un tronçon de cône (270) situé au-dessus et un tronçon de cône (271) situé au-dessous, les deux tronçons de cône (270, 271) étant alignés l'un avec l'autre.

27. Embout (2) selon la revendication 22, **caractérisé en ce que** la bague d'appui (4)
a) présente aussi sur le bord inférieur (41) un chanfrein (400) s'étendant radialement, qui s'élargit coniquement vers le bord inférieur (41), ce qui fait que la bague d'appui (4) est réalisée à l'identique sur le bord supérieur et le bord inférieur (40, 41) ; et
b) peut être réalisée ouverte au moyen d'une fente verticale (42) traversante, ou présente des fentes d'expansion (43) partiellement entaillées.

28. Embout (2) selon la revendication 22 ou 27, **caractérisé en ce que** la bague d'appui (4) présente, pour l'élargissement du chanfrein (400), un taraudage (44) qui est complémentaire de la tige filetée (32) de la vis de base (3) et permet un vissage de la bague d'appui (4) par l'intermédiaire de la tige filetée (32).

29. Embout (2) selon la revendication 18 ou 22, **caractérisé en ce que** la vis de base (3)
a) présente un col de vis (31) entre sa tête de vis (30) et la tige filetée (32) ;
b) la surface oblique (310) sur le col de vis (31) se trouve à proximité de la tête de vis (30) ;
c) le col de vis (31) est de taille conique ou cylindrique conique, le col de vis (31) s'élargissant coniquement vers la tête de vis (30) ; et
d) la surface oblique (310) présente une plus grande rugosité que la tige filetée (32), afin d'obtenir un grand moment de desserrage pour la vis de base (3), à l'intérieur du dispositif de liaison.

30. Embout (2) selon l'une des revendications 18 à 29, **caractérisé en ce que** l'embout (2)
a) présente dans l'entrée (24) un élargissement qui commence sur le bord inférieur (272) et s'étend à l'intérieur de l'embout (2), au niveau de la hauteur de la bague d'appui (4), vers le haut, jusqu'à une surface d'épaulement (242) ;
b) l'élargissement (243) présente un plus grand diamètre libre que la zone de tête (241) située au-dessus, laquelle est destinée à recevoir la tête de vis (30) de la vis de base (3) insérée ;
c) l'élargissement (243) forme un ajustement serré avec la bague d'appui (4), de préférence dans le segment supérieur, vers le côté coronaire ;
d) la zone de tête (241) présente un plus grand diamètre libre que la zone située au-dessus de l'entrée (24) ; et
e) la zone de tête (241) se termine ver le côté supérieur, sur une surface d'épaulement (244) de rétrécissement, laquelle est positionnée de manière définie, ce qui fait que lors du desserrage de la vis de base (3), sa tête de vis (30) se trouve, par sa surface frontale supérieure contre la surface d'épaulement (244), avant que la tige filetée (32) de la vis de base (3) ne se décroche totalement du taraudage (14) de l'implant (1), et lorsque l'on continue de dévisser la vis de base (3), l'embout (2) est éjecté des tronçons de cône (120, 121) dans l'implant (1).

31. Embout (2) selon les revendications 23 et 25, **caractérisé en ce que**
a) sur la partie de racine (29) de l'embout (2), le contre-contour (28) complémentaire est un octogone mâle (28) avec huit surfaces planes (280) ;
b) sur un embout (2) avec partie de col (20) placée coudée sur la partie de racine (29), l'octogone mâle (28) est positionné de manière que soit
ba) deux surfaces planes (280) parallèles l'une à l'autre se situent perpendiculairement à la pente de la partie de col (20) ; soit
bb) l'octogone mâle (28) soit décalé de 22,5°, ce qui fait que les arêtes formées par deux surfaces planes (280) voisines au point d'intersection, sont perpendiculaires à la pente de la partie de col (20).

32. Embout (2) selon la revendication 23, **caractérisé en ce que**
a) dans le cas d'un embout (2) pour une superstructure (7) à visser transversalement, la partie de col (20) présente une première et une deuxième ouverture latérale (201) orientées transversalement ; et
b) la deuxième ouverture latérale (201) est décalée de 22,5° par rapport à l'alignement avec la première ouverture latérale (201).

33. Embout (2) selon la revendication 18, **caractérisé en ce que** sur la partie de col (20) de l'embout (2) est prévu un segment polygonal extérieur (21) dont les surfaces planes sont de préférence alignées avec les surfaces planes de l'octogone mâle (28) sur la partie de racine (29).

34. Embout (2) selon la revendication 33, **caractérisé en ce que**
a) le segment polygonal (21) est un octogone mâle (21) adjacent à la partie de racine (29) ;
b) au-dessus du segment polygonal (21) se situe un segment de cône (22) se rétrécissant vers le haut ; et
c) au-dessus du segment de cône (21) peut se situer un segment de guidage (23) cylindrique de fermeture.
